# EUROPEAN PATENT APPLICATION

(11) **EP 4 502 788 A1**
(43) Date of publication of application: **05.02.2025**
(21) Application number: 23853916.7
(22) Date of filing: 17.04.2023
(51) Int. Cl.: G06F 8/658, G06F 8/71

(54) **UPGRADE PACKAGE GENERATION METHOD, UPGRADE PACKAGE INSTALLATION METHOD, DEVICE, AND STORAGE MEDIUM**

(30) Priority: 17.08.2022 CN 202210988967
(71) Applicant: Honor Device Co., Ltd., Shenzhen, Guangdong 518040 (CN)
(72) Inventor: CHEN, Chao, Shenzhen, Guangdong 518040 (CN); ZHANG, Zenghui, Shenzhen, Guangdong 518040 (CN); WANG, Yanzhao, Shenzhen, Guangdong 518040 (CN); HUANG, Jiulin, Shenzhen, Guangdong 518040 (CN)
(74) Representative: MERH-IP Matias Erny Reichl Hoffmann Patentanwälte PartG mbB
(86) International application number: PCT/CN2023/088741
(87) International publication number: WO 2024/037006

(57) **Abstract**

This application discloses an upgrade package generation method and installation method, a device, and a storage medium, and pertains to the field of communication technologies. The method includes: obtaining a first installation package and a second installation package whose version is higher than that of the first installation package; slicing the first installation package to obtain a first slice sequence, and slicing the second installation package to obtain a second slice sequence, where slices at same rankings in the first slice sequence and the second slice sequence form a plurality of slice pairs; performing data processing on each slice pair based on a data similarity of each of the plurality of slice pairs to obtain upgrade package data corresponding to each slice pair, where the data processing includes at least skip processing, XOR processing, or differential processing; and generating an upgrade package based on a slice sequence number of each slice pair, and a data processing type and the upgrade package data that correspond to each slice pair. In this way, an upgrade package with a relatively small data amount can be generated, thereby shortening download time of the upgrade package and lowering a requirement on storage resources of a terminal device.

## Description

This application claims priority to Chinese Patent Application No. 202210988967.X, filed with the China National Intellectual Property Administration on August 17, 2022 and entitled "UPGRADE PACKAGE GENERATION METHOD AND INSTALLATION METHOD, DEVICE, AND STORAGE MEDIUM", which is incorporated herein by reference in its entirety.

### TECHNICAL FIELD

This application relates to the field of communication technologies, and in particular, to an upgrade package generation method and installation method, a device, and a storage medium.

### BACKGROUND

A system or software of a terminal device such as a mobile phone, a tablet computer, or a wearable device may be upgraded after a vendor releases a new version. In a current upgrade method, a single-package upgrade policy is mainly used. Specifically, the terminal device initiates software version detection once, and a server returns a download path to the terminal device, so that the terminal device obtains an upgrade package based on the download path, and then performs a version upgrade based on the upgrade package.

In a related technology, to reduce storage resources of the server and time for downloading the upgrade package by the terminal device, and reduce development costs, the upgrade package is usually a differential file between two adjacent versions. For example, when an upgrade package of a to-be-upgraded object such as the system or the software is prepared, a first installation package and a second installation package of the to-be-upgraded object may be first obtained, and a version of the second installation package is higher than a version of the first installation package. Then, differential processing is performed on the first installation package and the second installation package to obtain the differential file, and the differential file is packaged into the upgrade package. After obtaining the upgrade package, the terminal device may perform restoration processing based on the upgrade package and the stored first installation package to obtain the second installation package, and then implement a version upgrade by installing the second installation package.

However, a data amount of the upgrade package obtained by performing differential processing on the first installation package and the second installation package as a whole is still relatively large, resulting in relatively long download time spent by the terminal device. In addition, storage resources of the terminal device are required to be large enough to meet a requirement for downloading and installing the upgrade package.

### SUMMARY

This application provides an upgrade package generation method and installation method, a device, and a storage medium, which can reduce a data amount of an upgrade package to a relatively large extent, generate an upgrade package with a relatively small data amount, shorten download time of the upgrade package, and lower a requirement on storage resources of a terminal device. The technical solutions are as follows:

According to a first aspect, an upgrade package generation method is provided, and is applied to a first device, and the method includes:
obtaining an old version of an installation package and a new version of an installation package, and separately slicing the new version and the old version of the installation packages to obtain a first slice sequence corresponding to the old version of the installation package and a second slice sequence corresponding to the new version of the installation package, where slices at a same ranking in the second slice sequence and the first slice sequence form a slice pair, and a plurality of slices in the second slice sequence and a plurality of slices in the first slice sequence form a plurality of slice pairs; then, performing data processing on each slice pair based on a data similarity of each of the plurality of slice pairs to obtain upgrade package data corresponding to each slice pair, where the data processing includes at least skip processing, XOR processing, or differential processing; and then, generating an upgrade package based on a slice sequence number of each of the plurality of slice pairs, and a data processing type and the upgrade package data that correspond to each slice pair, where the upgrade package includes upgrade package data corresponding to a plurality of slice sequence numbers and data processing type information corresponding to each slice sequence number.

Skip processing means that data of a corresponding slice pair is not processed, and upgrade package data that corresponds to a slice pair and that is obtained through skip processing is empty. In the upgrade package, upgrade package data whose corresponding data processing type is skip processing is empty. XOR processing refers to outputting different results based on whether data of a slice pair at different bits is the same, that is, a processing result of XOR processing is used to indicate whether data of the slice pair at the different bits is the same. For example, when data of the slice pair at a specific bit is the same, a corresponding bit of an XOR processing result is a first value. When data of the slice pair at a specific bit is different, a corresponding bit of the XOR processing result is a second value. Differential processing refers to determining a data difference between two slices in a slice pair, that is, a result of differential processing is used to reflect a data difference of each slice pair.

In this embodiment of this application, when the upgrade package is prepared, the new version and the old version of the installation packages may be first sliced. Then, differential processing, XOR processing, or skip processing is performed on each slice pair based on the data similarity of each slice pair corresponding to the new version and the old version. For example, skip processing is performed when data is the same, XOR processing is performed when the data similarity is relatively high, or differential processing is performed when the data similarity is relatively low, instead of performing differential processing on all slice pairs corresponding to the new version and the old version. By performing different processing based on the data similarity of the slice pair, a deficiency of performing differential processing on all the slice pairs can be overcome, a data amount of the upgrade package is reduced to a relatively large extent, and an upgrade package with a relatively small data amount is generated. This further shortens download time of the upgrade package and lowers a requirement on storage resources of a terminal device.

In an example, the plurality of slice pairs include a first slice pair, and the first slice pair includes a first slice in the first slice sequence and a second slice in the second slice sequence. An operation of performing data processing on each slice pair based on a data similarity of each of the plurality of slice pairs to obtain upgrade package data corresponding to each slice pair may include the following several cases:

Case 1: If data of the first slice and the second slice is the same, skip processing is performed on the first slice pair, and upgrade package data corresponding to the first slice pair is empty.

In this embodiment of this application, for a slice pair with same data, the slice pair may not be processed. Subsequently, the old version of the slice may be directly used for data installation.

Case 2: If data of the first slice and the second slice is different and a data similarity is greater than or equal to a first threshold, that is, the data is highly similar, XOR processing is performed on the first slice pair to obtain first data, and upgrade package data corresponding to the first slice pair is determined based on the first data.

In this embodiment of this application, for a slice pair whose data is highly similar, XOR processing may be performed on the slice pair. An XOR processing result is used to indicate which part of data is the same and which part of data is different in the slice pair.

In an example, an operation of performing XOR processing on the first slice pair to obtain first data includes: performing XOR processing on data of the first slice and the second slice at a corresponding byte location to obtain the first data.

If the data of the first slice and the second slice at the corresponding byte location is the same, data of the first data at the corresponding byte location is the first value. If the data of the first slice and the second slice at the corresponding byte location is different, data of the first data at the corresponding byte location is the second value. To be specific, if data of the first slice and the second slice at a same byte location is the same, the first value is output at the same byte location of the first data. If data of the first slice and the second slice at a same byte location is different, the second value is output at the same byte location of the first data.

In an example, if data of the first slice pair is not binary data, the data of the first slice pair may be first converted into binary data, and then XOR processing is performed on the first slice pair converted into the binary data. For example, an operation of performing XOR processing on data of the first slice and the second slice at a corresponding byte location includes the following two cases:
If both the data of the first slice and the data of the second slice are binary data, XOR processing is performed on binary values of the first slice and the second slice at the corresponding byte location to obtain the first data. If the values in the first slice and the second slice at the corresponding byte location are the same, a value of the first data at the corresponding byte location is 0. If the values in the first slice and the second slice at the corresponding byte location are different, a value of the first data at the corresponding byte location is 1.

If the data of at least one of the first slice and the second slice is not binary data, data that is of a slice in the first slice and the second slice and that is not binary data is converted into binary data, and XOR processing is performed on binary values that are of the first slice and the second slice at the corresponding byte location and that are converted into binary data, to obtain the first data. If the values that are of the first slice and the second slice at the corresponding byte location and that are converted into the binary data are the same, a value of the first data at the corresponding byte location is 0. If the values that are of the first slice and the second slice at the corresponding byte location and that are converted into the binary data are different, a value of the first data at the corresponding byte location is 1.

In an example, an operation of determining upgrade package data corresponding to the first slice pair based on the first data may include: determining the first data as the upgrade package data corresponding to the first slice pair; or performing compression processing on the first data to obtain third data, and determining the third data as the upgrade package data corresponding to the first slice pair.

Case 3: If a data similarity between the first slice and the second slice is less than the first threshold, that is, a data difference is relatively large, differential processing is performed on the first slice pair to obtain second data, and upgrade package data corresponding to the first slice pair is determined based on the second data.

The second data is a differential processing result, namely, a differential file of the first slice pair.

In this embodiment of this application, if the data difference between the first slice and the second slice is relatively large, differential processing may be performed on the first slice pair, to indicate the data difference of the first slice pair by using the differential processing result.

In an example, the determining upgrade package data corresponding to the first slice pair based on the second data may include: determining the second data as the upgrade package data corresponding to the first slice pair; or performing compression processing on the second data to obtain fourth data, and determining the fourth data as the upgrade package data corresponding to the first slice pair.

In an example, when the upgrade package is generated based on the slice sequence number of each of the plurality of slice pairs, and the data processing type and the upgrade package data that correspond to each slice pair, the upgrade package data corresponding to the slice pair indicated by each of the plurality of slice sequence numbers may be written into data information of an initial data packet, and the data processing type corresponding to the slice pair indicated by each slice sequence number and storage location information that is in the data information of the initial data packet and that is of the upgrade package data corresponding to the slice pair indicated by each slice sequence number may be written into header information of the initial data packet. An initial data packet obtained after data writing is the upgrade package, and the plurality of slice sequence numbers are the slice sequence numbers of the plurality of slice pairs.

The storage location information that is in the data information of the initial data packet and that is of the upgrade package data corresponding to the slice pair indicated by each slice sequence number is used to indicate a storage location that is in the data information of the initial data packet and that is of the upgrade package data corresponding to the slice pair indicated by each slice sequence number. For example, the storage location information of the upgrade package data corresponding to each slice pair in the data information of the initial data packet may be an incremental offset of the upgrade package data corresponding to each slice pair in the data information of the initial data packet.

In this way, the header information of the generated upgrade package stores the data processing type corresponding to each of the plurality of slice sequence numbers and the storage location information of the upgrade package data corresponding to each slice sequence number in data information of the upgrade package. The data information of the upgrade package stores the upgrade package data corresponding to each slice sequence number.

Storage location information of upgrade package data corresponding to a slice sequence number whose corresponding data processing type is skip processing is empty, that is, the slice sequence number whose data processing type is skip processing has no corresponding upgrade package data, or storage location information of the corresponding upgrade package data in the upgrade package. The storage location information of the upgrade package data corresponding to each slice sequence number in the data information of the upgrade package may be the incremental offset of the upgrade package data corresponding to each slice sequence number in the data information of the upgrade package, or the like.

The upgrade package generated in the foregoing manner may indicate an association relationship between the old version of the installation package and the new version of the installation package. Specifically, the upgrade package may indicate which slice pairs in corresponding slice sequences have same data, data of which slice pairs is highly similar, a data difference of which slice pairs is relatively large, which data is the same and which data is different in a slice pair with highly similar data, and a differential file of a slice pair with a relatively large data difference. In this way, for a device whose version is to be upgraded, after obtaining the upgrade package, the device can also restore the new version of the installation package based on the upgrade package and the old version of the stored installation package.

In addition, the plurality of slice sequence numbers may be further written into the header information of the initial data packet. For example, the plurality of slice sequence numbers, the data processing type corresponding to each slice sequence number, and the storage location information of the upgrade package data corresponding to each slice sequence number in the data information of the upgrade package are correspondingly written into the header information of the initial data packet. In this way, the corresponding data processing type and the upgrade package data can be indicated by using the slice sequence number.

In addition, a slice size may be further written into the header information of the initial data packet, so that the header information of the generated upgrade package further includes the slice size. Further, a slice quantity may be further written into the header information of the initial data packet, so that the header information of the generated upgrade package further includes the slice quantity.

By writing the slice size and/or the slice quantity into the header information, when a terminal device that receives the upgrade package performs restoration and installation, it is convenient to slice, based on the slice size and/or the slice quantity in the header information, an old version of an installation package stored in the terminal device, to obtain a slice sequence corresponding to the plurality of slice sequence numbers in the upgrade package.

The slice size is sizes of slices in the first slice sequence and the second slice sequence. The slice quantity is a quantity of slice pairs of slices at same rankings in the first slice sequence and the second slice sequence. For example, a slice size of each slice in the first slice sequence and the second slice sequence is a preset size, and a slice size written into the header information is the preset size. A slice quantity of the first slice sequence is the same as a slice quantity of the second slice sequence, and both are a preset quantity, and a slice quantity written into the header information is the preset quantity.

By presetting the slice size and the slice quantity, the new version and the old version of installation packages may be sliced based on the preset slice size and the preset slice quantity when the upgrade package is prepared, to ensure that slice sizes and slice quantities of the new version and the old version of the slice sequences are aligned. It is convenient to subsequently perform processing based on each aligned slice pair in the new version and the old version of the slice sequences, to generate the upgrade package. In addition, by writing the preset slice size and the preset slice quantity into the header information, it is also convenient to slice, based on the preset slice size and the preset slice quantity in the header information, the old version of the installation package stored in the terminal device when the terminal device that receives the upgrade package performs the restoration and installation, to obtain the slice sequence corresponding to the plurality of slice sequence numbers in the upgrade package. It is convenient to subsequently restore the new version of the installation package based on upgrade package data and slice data with a same sequence number.

According to a second aspect, an upgrade package generation apparatus is provided, and the upgrade package generation apparatus has a function of implementing a behavior of the upgrade package generation method in the first aspect. The upgrade package generation apparatus includes at least one module, and the at least one module is configured to implement the upgrade package generation method provided in the first aspect.

According to a third aspect, an upgrade package generation apparatus is provided, and a structure of the upgrade package generation apparatus includes a processor and a memory. The memory is configured to store a program supporting the upgrade package generation apparatus in performing the upgrade package generation method provided in the first aspect, and store related data used to implement the upgrade package generation method according to the first aspect. The processor is configured to perform the program stored in the memory. The upgrade package generation apparatus may further include a communication bus. The communication bus is configured to establish a connection between the processor and the memory.

According to a fourth aspect, a computer-readable storage medium is provided, and the computer-readable storage medium stores instructions. When the instructions are run on a computer, the computer is enabled to perform the upgrade package generation method according to the first aspect.

According to a fifth aspect, a computer program product including instructions is provided. When the computer program product runs on a computer, the computer is enabled to perform the upgrade package generation method according to the first aspect.

According to a sixth aspect, an upgrade package installation method is provided and is applied to a second device, and the method includes:
obtaining an upgrade package, where the upgrade package includes upgrade package data corresponding to a plurality of slice sequence numbers and data processing type information corresponding to each slice sequence number; performing restoration processing on a slice corresponding to each slice sequence number based on a data processing type corresponding to each of the plurality of slice sequence numbers, to obtain installation package data corresponding to each slice sequence number; and then, generating a new version of an installation package based on installation package data corresponding to the plurality of slice sequence numbers, and installing the new version of the installation package.

The data processing type includes at least skip processing, XOR processing, or differential processing, and upgrade package data whose corresponding data processing type is skip processing is empty. When data processing types are different, restoration processing manners are different. Specifically, based on the different data processing types, the performing restoration processing on a slice corresponding to each slice sequence number based on a data processing type corresponding to each of the plurality of slice sequence numbers includes the following several cases:
Case 1: When the data processing type corresponding to each slice sequence number is skip processing, copy processing is performed on a slice corresponding to each slice sequence number in a first slice sequence, to obtain the installation package data corresponding to each slice sequence number.

The first slice sequence is obtained by performing slice processing on an old version of an installation package stored in the second device.

To be specific, if data of a slice pair indicated by the first slice sequence number is the same, slice data in the first slice sequence at a corresponding location may be directly used as slice data of the new version of the installation package at the corresponding location.

Case 2: When the data processing type corresponding to each slice sequence number is XOR processing, XOR processing is performed on upgrade package data corresponding to each slice sequence number and a slice corresponding to each slice sequence number in a first slice sequence, to obtain the installation package data corresponding to each slice sequence number.

Case 3: When the data processing type corresponding to each slice sequence number is differential processing, inverse differential processing is performed on upgrade package data corresponding to each slice sequence number and a slice corresponding to each slice sequence number in a first slice sequence, to obtain the installation package data corresponding to each slice sequence number.

The inverse differential processing is a reverse operation of differential processing, and is used to restore an original file based on a differential file.

In this embodiment of this application, when the upgrade package is installed, restoration processing may be performed on slice data with a same slice sequence number in the old version of the installation package based on the data processing type corresponding to each slice sequence number in the upgrade package, to restore the new version of the installation package. Then, the new version of the installation package is installed. Because a data amount of the upgrade package is relatively small, a quantity of storage resources required for restoring and installing the upgrade package is also relatively small. This lowers a requirement on storage resources of a terminal device, and is suitable for a version update of a terminal device with a relatively small memory.

In addition, restoration processing in different forms may be performed on slices corresponding to the slice sequence numbers based on different data processing types corresponding to the slice sequence numbers. For example, copy processing is performed when the data processing type is skip processing, XOR processing is performed when the data processing type is XOR processing, or inverse differential processing is performed when the data processing type is differential processing. In this way, the new version of the installation package can be accurately restored based on the upgrade package with the relatively small data amount. A restoration and installation method adapted to the upgrade package generated according to the upgrade package generation method in the first aspect is proposed.

In an example, header information of the upgrade package includes a slice size, and the old version of the installation package may be sliced based on the slice size to obtain the first slice sequence. In this way, a size of each slice in the first slice sequence can be the slice size.

In another example, header information of the upgrade package includes a slice size and a slice quantity, and the old version of the installation package may be sliced based on the slice size and the slice quantity to obtain the first slice sequence. In this way, a size of each slice in the first slice sequence can be the slice size, and a quantity of slices included in the first slice sequence can be the slice quantity.

In an example, if the header information of the upgrade package stores the data processing type corresponding to each of the plurality of slice sequence numbers and storage location information of the upgrade package data corresponding to each of the plurality of slice sequence numbers in data information of the upgrade package, the data information of the upgrade package stores the upgrade package data corresponding to each of the plurality of slice sequence numbers. Before the installation package data corresponding to each slice sequence number is generated, the data processing type corresponding to each slice sequence number and the storage location information of the upgrade package data corresponding to each slice sequence number in the data information of the upgrade package may be first obtained from the header information of the upgrade package. The upgrade package data corresponding to each slice sequence number is obtained from the data information of the upgrade package based on the storage location information of the upgrade package data corresponding to each slice sequence number in the data information of the upgrade package. Then, restoration processing is performed on the slice corresponding to each slice sequence number based on the data processing type corresponding to each slice sequence number.

In an example, the installation package data corresponding to the plurality of slice sequence numbers is concatenated to obtain a second installation package.

According to a seventh aspect, an upgrade package installation apparatus is provided, and the upgrade package installation apparatus has a function of implementing a behavior of the upgrade package installation method in the first aspect. The upgrade package installation apparatus includes at least one module, and the at least one module is configured to implement the upgrade package installation method provided in the first aspect.

According to an eighth aspect, an upgrade package installation apparatus is provided, and a structure of the upgrade package installation apparatus includes a processor and a memory. The memory is configured to store a program supporting the upgrade package installation apparatus in performing the upgrade package installation method provided in the first aspect, and store related data used to implement the upgrade package installation method according to the first aspect. The processor is configured to perform the program stored in the memory. The upgrade package installation apparatus may further include a communication bus. The communication bus is configured to establish a connection between the processor and the memory.

According to a ninth aspect, a computer-readable storage medium is provided, and the computer-readable storage medium stores instructions. When the instructions are run on a computer, the computer is enabled to perform the upgrade package installation method according to the first aspect.

According to a tenth aspect, a computer program product including instructions is provided. When the computer program product runs on a computer, the computer is enabled to perform the upgrade package installation method according to the first aspect.

The upgrade package generation method provided in this embodiment of this application has the following beneficial effects:
In this embodiment of this application, the new version and the old version of the installation packages may be first sliced. Then, differential processing, XOR processing, or skip processing is performed on each slice pair based on the data similarity of each slice pair corresponding to the new version and the old version. For example, skip processing is performed when data is the same, XOR processing is performed when the data similarity is relatively high, or differential processing is performed when the data similarity is relatively low, to obtain the upgrade package data corresponding to each slice pair, instead of performing differential processing on all the slice pairs corresponding to the new version and the old version. Then, the upgrade package is generated based on the data processing type and the upgrade package data that correspond to each slice pair. In a process of generating the upgrade package, by performing different processing based on the data similarity of the slice pair, the deficiency of performing differential processing on all the slice pairs can be overcome, the data amount of the upgrade package is reduced to a relatively large extent, and the upgrade package with the relatively small data amount is generated. This further shortens the download time of the upgrade package and lowers the requirement on the storage resources of the terminal device.

### BRIEF DESCRIPTION OF DRAWINGS

FIG. 1 is a schematic diagram of a system for updating a version of a device according to an embodiment of this application;
FIG. 2 is a schematic diagram of logic of generation and installation processes of an upgrade package according to a related technology;
FIG. 3 is a schematic diagram of another system for updating a version of a device according to an embodiment of this application;
FIG. 4 is a schematic diagram of logic of generation and installation processes of an upgrade package according to an embodiment of this application;
FIG. 5 is a schematic diagram of a structure of a computer device according to an embodiment of this application;
FIG. 6 is a schematic diagram of a structure of a terminal device according to an embodiment of this application;
FIG. 7 is a flowchart of upgrade package generation and installation methods according to an embodiment of this application;
FIG. 8A to FIG. 8C are a schematic flowchart of updating a version of a device according to an embodiment of this application;
FIG. 9A and FIG. 9B are a schematic diagram of logic of generation and installation processes of an upgrade package according to an embodiment of this application;
FIG. 10 is a schematic diagram of a structure of an upgrade package generation apparatus according to an embodiment of this application; and
FIG. 11 is a schematic diagram of a structure of an upgrade package installation apparatus according to an embodiment of this application.

### DESCRIPTION OF EMBODIMENTS

To make the objectives, technical solutions, and advantages of this application clearer, the following further describes implementations of this application in detail with reference to the accompanying drawings.

It should be understood that "a plurality of" mentioned in this application refers to two or more. In the descriptions of this application, unless otherwise stated, "/" means "or". For example, A/B may indicate A or B. The term "and/or" in this specification is merely an association relationship for describing associated objects, and indicates that three relationships may exist. For example, "A and/or B" may indicate the following three cases: Only A exists, both A and B exist, and only B exists. In addition, to clearly describe technical solutions of this application, words such as "first" and "second" are used to distinguish between same items or similar items with basically the same functions and effects. A person skilled in the art may understand that the words such as "first" and "second" do not limit a quantity and an execution sequence, and the words such as "first" and "second" do not indicate a definite difference.

Before the upgrade package generation and upgrade package installation methods provided in the embodiments of this application are described in detail, an application scenario and an implementation environment included in the embodiments of this application are first described.

A terminal device such as a mobile phone, a tablet computer, or a wearable device needs to update a version of an object such as a system or software of the terminal device based on an upgrade package released by a vendor. For example, the terminal device may implement a version update by using an over the air (over the air, OTA) upgrade technology. An OTA technology is a technology for downloading data by using a wireless network. The OTA upgrade technology is a technology for remotely updating a version of a to-be-upgraded object of a terminal device by using a wireless network interface of the terminal device, to implement remote upgrade of a version of an object such as a system or software of the terminal device. It should be understood that the terminal device may alternatively implement a version update by using another technology.

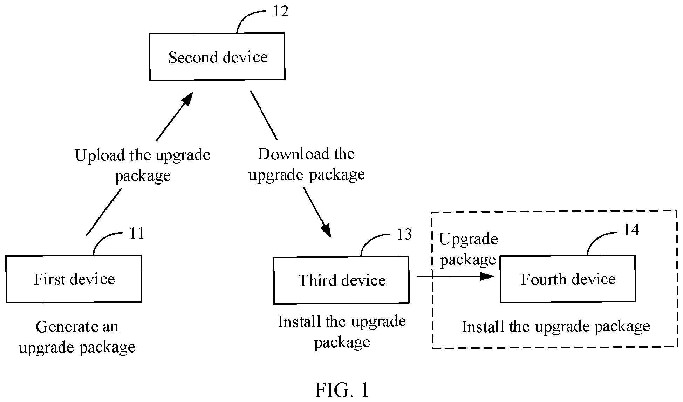

Reference is made to FIG. 1. FIG. 1 is a schematic diagram of a system for updating a version of a device according to an embodiment of this application. As shown in FIG. 1, the system includes a first device 11, a second device 12, a third device 13, and a fourth device 14. The first device 11, the second device 12, the third device 13, and the fourth device 14 may communicate with each other by using a wired network or a wireless network.

The first device 11 is a device configured to prepare and upload an upgrade package, and may be a terminal device, a server, or the like. The second device 12 is a device configured to store and deliver the upgrade package, for example, a cloud server. The third device 13 is a device configured to download the upgrade package, and may be a terminal device, a server, or the like. In addition, after downloading the upgrade package, the third device 13 may perform a version update based on the upgrade package, or may forward the downloaded upgrade package to the fourth device 14. The fourth device performs a version update based on the upgrade package. The fourth device 14 is a device configured to perform a version upgrade, and may be a terminal device, a server, or the like. The terminal device may be a mobile phone, a tablet computer, a computer, a wearable device, or the like.

For example, the first device 11 prepares an upgrade package of a to-be-upgraded object, and uploads the upgrade package to the second device 12. The second device 12 stores the upgrade package. The third device 13 downloads the upgrade package from the second device 12, and updates a version of the to-be-upgraded object based on the upgrade package. Alternatively, after downloading the upgrade package from the second device 12, the third device 13 may send the upgrade package to the fourth device 14. The fourth device 14 updates a version of a to-be-upgraded object of the fourth device 14 based on the upgrade package.

There are mainly two methods for preparing an upgrade package: One is to prepare the upgrade package in a full upgrade manner. To be specific, all data of a new version of an installation package is packaged into the upgrade package. However, a data amount of this type of upgrade package is relatively large. The other is to prepare the upgrade package in a differential upgrade manner. To be specific, differential processing is performed on the new version of the installation package and an old version of an installation package, to obtain a differential file, and the differential file is packaged into the upgrade package. A data amount of this type of upgrade package is less than the data amount of the upgrade package obtained through full upgrade.

Currently, to reduce storage resources of the server and time for downloading the upgrade package by the terminal device, and reduce development costs, the upgrade package is usually the upgrade package prepared in the differential upgrade manner, that is, the upgrade package is usually a differential file between two adjacent versions. For example, the first device 11 may perform differential processing on an old version of an installation package 1 and a new version of an installation package 2 to obtain a differential file, and package the differential file into an upgrade package, to obtain an upgrade package of a to-be-upgraded object. After obtaining the upgrade package, the third device 13 or the fourth device 14 may perform restoration processing based on the upgrade package and the old version of the installation package 1, to obtain the new version of the installation package 2, and implement a version update by installing a second installation package. Restoration processing is a reverse operation of differential processing, and is used to restore an original file based on the differential file.

However, a data amount of the upgrade package obtained in this manner is still relatively large, resulting in relatively long download time spent by the device that downloads the upgrade package. In addition, there is a specific requirement on storage resources of a device whose version is to be updated, and the storage resources of the device need to be large enough to meet an installation requirement of the upgrade package. For example, for a device with a relatively small memory such as a wearable device, because a memory of the device is limited, it is possible that an upgrade package with a relatively large data amount cannot be stored, and the upgrade package with the relatively large data amount cannot be restored and installed. Consequently, the upgrade package obtained in this manner cannot meet a version update requirement of the device with a small memory.

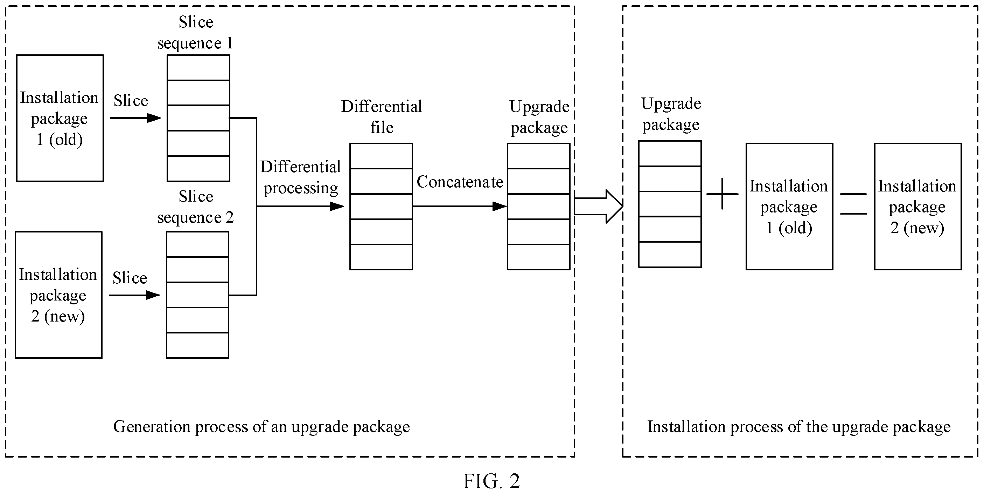

Therefore, another method for preparing an upgrade package is further provided in a related technology. Reference is made to FIG. 2. FIG. 2 is a schematic diagram of logic of generation and installation processes of an upgrade package according to a related technology. As shown in FIG. 2, the generation process of the upgrade package includes: The old version of the installation package 1 and the new version of the installation package 2 are obtained. Then, the installation package 1 is sliced to obtain a slice sequence 1, and the installation package 2 is sliced to obtain a slice sequence 2. Then, for each slice pair of slices at a same ranking in the slice sequence 1 and the slice sequence 2, differential processing is performed on each slice pair to obtain a differential file corresponding to each slice pair. Then, differential files corresponding to a plurality of slice pairs obtained through differential processing are concatenated to obtain the upgrade package. The installation process of the upgrade package includes: After the upgrade package is obtained, restoration processing is performed based on the differential files corresponding to the plurality of slice pairs in the upgrade package and the old version of the installation package 1, to obtain the new version of the installation package 2.

In the foregoing method for preparing an upgrade package, the differential file between the new version and the old version is generated by first slicing the new version and the old version of the installation packages, and then performing differential processing on all slice pairs corresponding to the new version and the old version. Although a data amount of the upgrade package may be reduced to some extent, the data amount of the upgrade package generated in this manner may still be relatively large due to a deficiency of a differential algorithm. For example, if the new version and the old version of the installation packages are relatively small, a slice size obtained through slicing is also relatively small. For a slice pair with a relatively small slice size, a differential file obtained by performing differential processing on the slice pair is relatively large. For example, for a slice pair of 1 byte, a differential file obtained by performing differential processing on the slice pair is greater than 1 byte.

In this embodiment of this application, to reduce a data amount of an upgrade package to a relatively large extent, shorten download time of the upgrade package, and lower a requirement on storage resources of a terminal device, other upgrade package generation and installation methods are provided. For ease of understanding, a version update process of a device is described below by using an example in which the first device 11 that prepares the upgrade package is a packaging server, the second device 12 that stores and delivers the upgrade package is a cloud server, the third device 13 that downloads the upgrade package is a mobile phone, and the fourth device 14 that performs a version update is a headset.

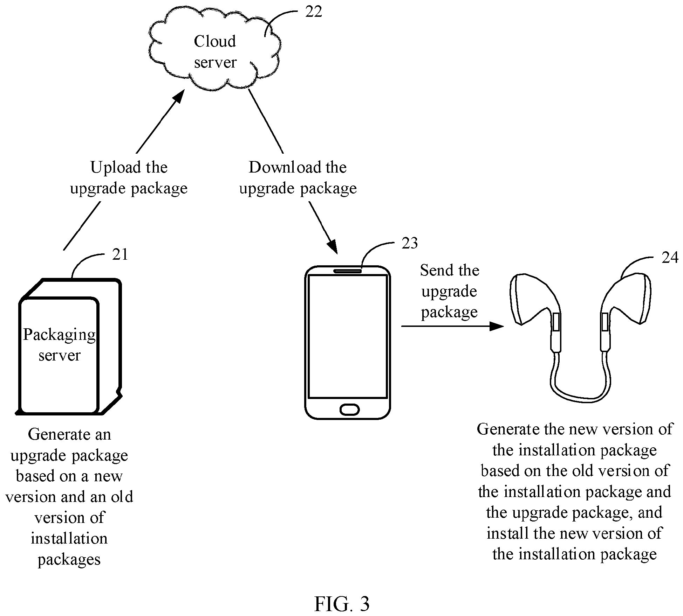

FIG. 3 is a schematic diagram of another system for updating a version of a device according to an embodiment of this application. As shown in FIG. 3, the system includes a packaging server 21, a cloud server 22, a mobile phone 23, and a headset 24. The packaging server 21, the cloud server 22, the mobile phone 23, and the headset 24 may be connected by using a wired network or a wireless network. The headset 24 is a wireless headset, for example, a wireless Bluetooth headset. The packaging server 21 may obtain an old version of an installation package 1 and a new version of an installation package 2, generate an upgrade package based on the installation package 1 and the installation package 2, and upload the upgrade package to the cloud server 22. The mobile phone 23 downloads the upgrade package from the cloud server 22, and sends the upgrade package to the headset 24. The headset 24 receives the upgrade package, and performs a version update by installing the upgrade package, for example, generates the new version of the installation package based on the old version of the installation package and the upgrade package, and installs the new version of the installation package.

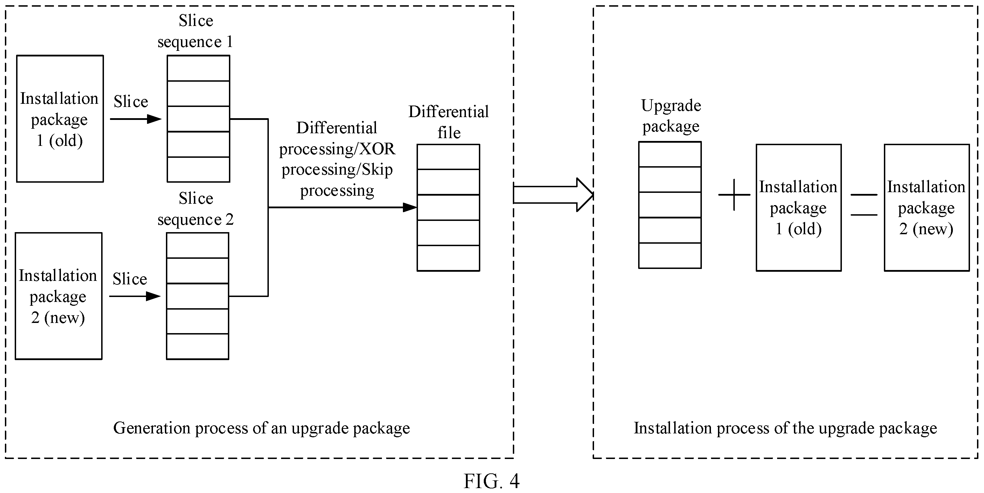

Referring to FIG. 4, a generation process of the upgrade package may include: The installation package 1 is sliced to obtain a slice sequence 1, and the installation package 2 is sliced to obtain a slice sequence 2. The slice sequence 1 and the slice sequence 2 each include a plurality of slices, slices at a same ranking in the slice sequence 1 and the slice sequence 2 form a slice pair, and a plurality of slices in the slice sequence 1 and a plurality of slices in the slice sequence 2 form a plurality of slice pairs. Data processing is performed on each slice pair based on a data similarity of each of the plurality of slice pairs to obtain upgrade package data corresponding to each slice pair. The data processing includes skip processing, XOR processing, or differential processing, and upgrade package data that corresponds to a slice pair and that is obtained through skip processing is empty. Then, the upgrade package is generated based on a slice sequence number of each slice pair, and a data processing type and the upgrade package data that correspond to each slice pair. The upgrade package includes upgrade package data corresponding to a plurality of slice sequence numbers and data processing type information corresponding to each slice sequence number, and upgrade package data whose corresponding data processing type is skip processing is empty.

Referring to FIG. 4, an installation process of the upgrade package includes: The installation package 2 is generated based on the upgrade package and the installation package 1; and the installation package 2 is installed. For example, the installation package 1 is sliced to obtain the slice sequence 1. Restoration processing is performed on a slice corresponding to each slice sequence number in the slice sequence 1 based on the data processing type corresponding to each of the plurality of slice sequence numbers included in the upgrade package, to obtain installation package data corresponding to each slice sequence number; and a second installation package is generated based on installation package data corresponding to the plurality of slice sequence numbers.

To be specific, in this embodiment of this application, when the upgrade package is prepared, after the new version and the old version of the installation packages are sliced, differential processing, XOR processing, or skip processing may be performed on each slice pair based on the data similarity of each slice pair corresponding to the new version and the old version. For example, skip processing is performed when data is the same, XOR processing is performed when the data similarity is relatively high, or differential processing is performed when the data similarity is relatively low, instead of performing differential processing on all slice pairs corresponding to the new version and the old version. By performing different processing based on the data similarity of the slice pair, a deficiency of performing differential processing on all the slice pairs can be overcome, a data amount of the upgrade package is reduced to a relatively large extent, and an upgrade package with a relatively small data amount is generated. This further shortens download time of the upgrade package and lowers a requirement on storage resources of the terminal device.

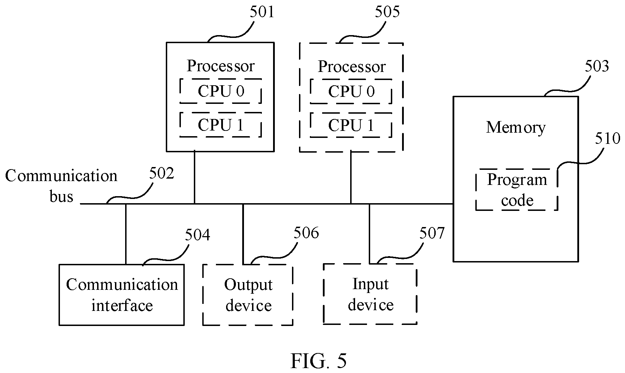

FIG. 5 is a schematic diagram of a structure of a computer device according to an embodiment of this application. The computer device may be the first device 11, the second device 12, the third device 13, or the fourth device 14 shown in FIG. 1. Referring to FIG. 5, the computer device includes at least one processor 501, a communication bus 502, a memory 503, and at least one communication interface 504.

The processor 501 may be a microprocessor (including a central processing unit (central processing unit, CPU) and the like), an application-specific integrated circuit (application-specific integrated circuit, ASIC), or one or more integrated circuits for controlling program execution in the solutions of this application.

The communication bus 502 may include a path for transmitting information between the foregoing components.

The memory 503 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be used to carry or store desired program code in a form of instructions or data structures and that can be accessed by a computer, but is not limited thereto. The memory 503 may exist independently, and is connected to the processor 501 through the communication bus 502. The memory 503 may alternatively be integrated with the processor 501.

The communication interface 504 uses any apparatus such as a transceiver to communicate with another device or a communication network, such as an Ethernet, a radio access network (radio access network, RAN), or a wireless local area network (wireless local area network, WLAN).

During specific implementation, in an embodiment, the processor 501 may include one or more CPUs, such as a CPU 0 and a CPU 1 shown in FIG. 5.

During specific implementation, in an embodiment, the computer device may include a plurality of processors, such as a processor 501 and a processor 505 shown in FIG. 5. Each of these processors may be a single-core processor, or may be a multi-core processor. The processor herein may be one or more devices, circuits, and/or processing cores configured to process data (for example, computer program instructions).

During specific implementation, in an embodiment, the computer device may further include an output device 506 and an input device 507. The output device 506 communicates with the processor 501, and may display information in a plurality of manners. For example, the output device 506 may be a liquid crystal display (liquid crystal display, LCD), a light emitting diode (light emitting diode, LED) display device, a cathode ray tube (cathode ray tube, CRT) display device, or a projector (projector). The input device 507 communicates with the processor 501, and may receive a user input in a plurality of manners. For example, the input device 507 may be a mouse, a keyboard, a touchscreen device, or a sensing device.

The foregoing computer device may be a general-purpose computer device or a dedicated computer device. During specific implementation, the computer device may be a desktop computer, a portable computer, a network server, a palmtop computer, a mobile phone, a tablet computer, a wireless terminal device, a communication device, or an embedded device. A type of the computer device is not limited in this embodiment of this application.

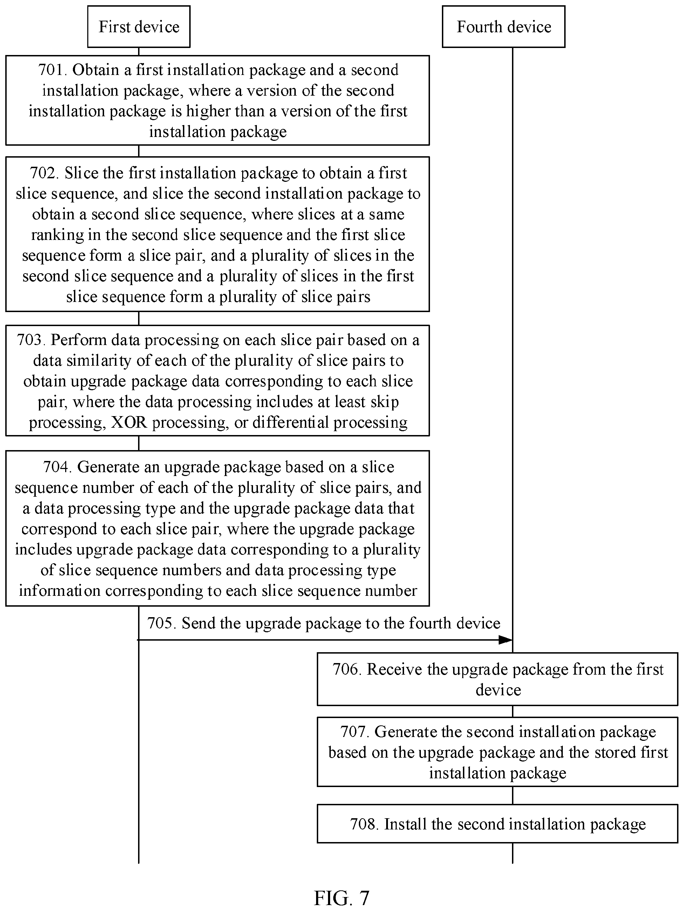

The memory 503 is configured to store program code 510 for executing the solutions in this application, and the processor 501 is configured to execute the program code 510 stored in the memory 503. The computer device may implement, by using the processor 501 and the program code 510 in the memory 503, upgrade package generation and installation methods provided in an embodiment of FIG. 7 below.

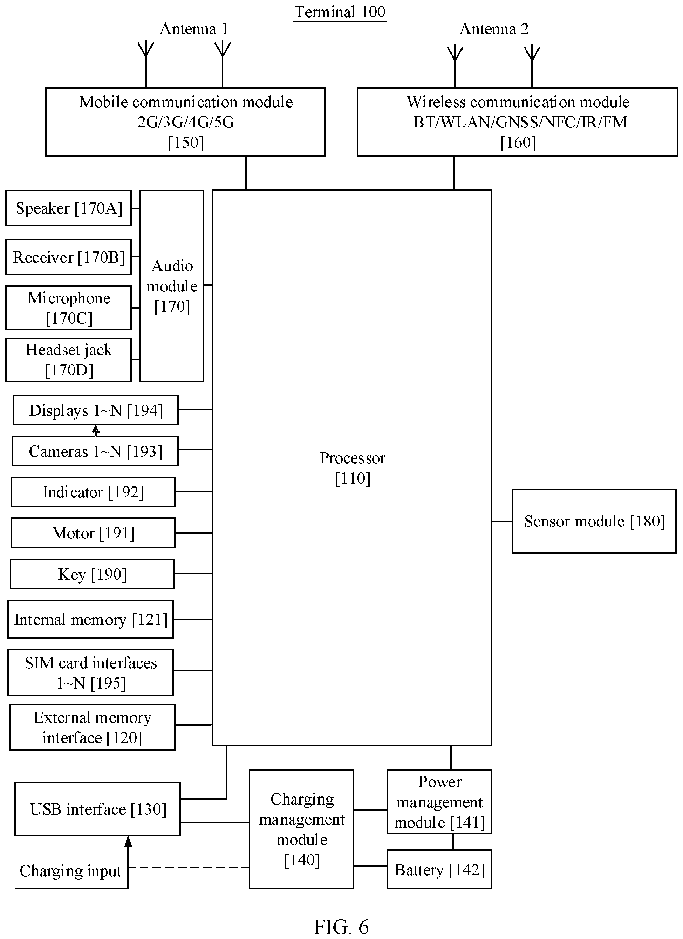

FIG. 6 is a schematic diagram of a structure of a terminal device 100 according to an embodiment of this application. The terminal device 100 may be the third device 13 or the fourth device 14 shown in FIG. 1. Referring to FIG. 6, the terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identity module (subscriber identity module, SIM) card interface 195, and the like.

It can be understood that the structure shown in this embodiment of this application does not constitute a specific limitation on the terminal device 100. In some other embodiments of this application, the terminal device 100 may include more or fewer components than those shown in the figure, combine some components, split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the terminal device 100. The controller may generate an operation control signal based on instruction operation code and a timing signal, to complete control of instruction fetching and instruction execution.

A memory may be further disposed in the processor 110, and is configured to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces, for example, may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It can be understood that an interface connection relationship between the modules shown in this embodiment of this application is merely an example for description, and does not constitute a limitation on the structure of the terminal device 100. In some other embodiments of this application, the terminal device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. The power management module 141 is configured to be connected to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal device 100 may be configured to cover one or more communication bands. Different antennas may be further multiplexed to increase antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the terminal device 100, including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transferred to the application processor. The application processor outputs a sound signal by using an audio device (not limited to the speaker 170A, the receiver 170B, and the like), or displays an image or a video by using the display 194.

The wireless communication module 160 may provide a wireless communication solution that is applied to the terminal device 100 and that includes a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), infrared (infrared, IR), and the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the terminal device 100, the antenna 1 is coupled to the mobile communication module 150, and the antenna 2 is coupled to the wireless communication module 160, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The terminal device 100 implements a display function by using the GPU, the display 194, the application processor, and the like. The GPU is a microprocessor for image processing and is connected to the display 194 and the application processor. The GPU is configured to perform mathematical and geometric calculation for graphics rendering. The processor 110 may include one or more GPUs that execute program instructions to generate or change displayed information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diode, QLED), or the like. In some embodiments, the terminal device 100 may include one or N displays 194, where N is an integer greater than 1.

The terminal device 100 may implement a photographing function by using the ISP, the camera 193, the video codec, the GPU, the display 194, the application processor, and the like.

The external memory interface 120 may be configured to be connected to an external memory card such as a Micro SD card, to expand a storage capability of the terminal device 100. The external memory card communicates with the processor 110 by using the external memory interface 120, to implement a data storage function, for example, to store files such as music and a video in the external memory card.

The internal memory 121 may be configured to store computer-executable program code. The computer-executable program code includes instructions. The processor 110 runs the instructions stored in the internal memory 121, to perform various function applications and data processing of the terminal device 100. The internal memory 121 may include a program storage area and a data storage area. The program storage area may store an operating system, an application required by at least one function (for example, a sound playing function or an image playing function), and the like. The data storage area may store data (for example, audio data and a phone book) created during use of the terminal device 100, and the like. In addition, the internal memory 121 may include a high-speed random access memory, and may further include a nonvolatile memory, for example, at least one magnetic disk storage device, a flash memory device, or a universal flash storage (universal flash storage, UFS).

The terminal device 100 may implement an audio function, for example, music playing or audio recording, by using the audio module 170, the speaker 170A, the receiver 170B, the microphone 170C, the headset jack 170D, the application processor, and the like.

Generation and installation processes of an upgrade package provided in an embodiment of this application are described in detail below.

FIG. 7 is a flowchart of upgrade package generation and installation methods according to an embodiment of this application. The methods are applied to a first device and a fourth device. As shown in FIG. 7, the methods include the following steps.

Step 701: The first device obtains a first installation package and a second installation package, where a version of the second installation package is higher than a version of the first installation package.

The first installation package and the second installation package are installation packages of different versions of a to-be-upgraded object. In addition, the version of the second installation package is higher than the version of the first installation package. The to-be-upgraded object may be an object whose version needs to be updated, such as a system or software.

For example, both the first installation package and the second installation package are installation packages of target software, the first installation package is an installation package of a version 1, the second installation package is an installation package of a version 2, and the version 2 is higher than the version 1. The target software may be any software.

In an example, the first device may obtain the first installation package or the second installation package uploaded by a user. Alternatively, the first installation package is obtained based on a storage path of the first installation package, and the second installation package is obtained based on a storage path of the second installation package. Alternatively, the first installation package is downloaded based on a download path of the first installation package, and the second installation package is obtained based on a download path of the second installation package.

In a possible implementation, upgrade package preparation software is installed on the first device. A related person may upload the first installation package and the second installation package in a related interface of the upgrade package preparation software, and then trigger an upgrade package preparation instruction. In response to the upgrade package preparation instruction, the upgrade package preparation software of the first device may obtain the first installation package and the second installation package that are uploaded by the user, and then process the first installation package and the second installation package according to the following step 702-step 704 to generate an upgrade package. Alternatively, the related person may input or select a storage path of the first installation package and a storage path of the second installation package in a related interface of the upgrade package preparation software, and then trigger the upgrade package preparation instruction. In response to the upgrade package preparation instruction, the upgrade package preparation software of the first device may obtain the first installation package based on the storage path of the first installation package, and obtain the second installation package based on the storage path of the second installation package.

It should be understood that the first device may alternatively obtain the first installation package and the second installation package in another manner, for example, obtain the first installation package and the second installation package from another device, for example, download the first installation package and the second installation package from a server. A manner of obtaining the first installation package and the second installation package is not limited in this embodiment of this application.

Step 702: The first device slices the first installation package to obtain a first slice sequence, and slices the second installation package to obtain a second slice sequence, where slices at a same ranking in the second slice sequence and the first slice sequence form a slice pair, and a plurality of slices in the second slice sequence and a plurality of slices in the first slice sequence form a plurality of slice pairs.

The first slice sequence includes a plurality of slices, and the second slice sequence also includes a plurality of slices. For any two slices at a same ranking in the first slice sequence and the second slice sequence, the two slices may be referred to as a slice pair. For example, a first slice in the first slice sequence and a first slice in the second slice sequence are referred to as a slice pair, and a second slice in the first slice sequence and a second slice in the second slice sequence are referred to as a slice pair.

In an example, the first installation package and the second installation package may be sliced according to a same slicing rule. The slicing rule includes a preset slice size. The preset slice size is used to indicate that sizes of slices obtained through slicing are the same, and all are the preset slice size. In this way, it can be ensured that sizes of the slices in the first slice sequence and the second slice sequence are the same.

In addition, the slicing rule may further include a preset slice quantity, which is used to indicate that a slice quantity of a slice sequence obtained through slicing is the preset slice quantity. In this way, it can be ensured that a slice quantity of the first slice sequence and a slice quantity of the second slice sequence are the same.

Generally, installation package sizes of the first installation package and the second installation package of different versions are the same or not much different. Therefore, after the first installation package and the second installation package are sliced according to the same slicing rule, the slice quantity of the obtained first slice sequence and the slice quantity of the obtained second slice sequence are the same.

For example, it is assumed that the preset slice size in the slicing rule is 16k. The first slice sequence obtained by slicing the first installation package according to the slicing rule includes four slices, and a slice size of each slice is 16k. The second slice sequence obtained by slicing the second installation package according to the slicing rule also includes four slices, and a slice size of each slice is 16k. For example, the slice may be identified as a block, blk for short. The four slices in the first slice sequence may be respectively identified as 1-blk0, 1-blk1, 1-blk2, and 1-blk3. The four slices in the second slice sequence may be respectively identified as 2-blk0, 2-blk1, 2-blk2, and 2-blk3. The first slice sequence and the second slice sequence may form four slice pairs: 1-blk0 and 2-blk0, 1-blk1 and 2-blk1, 1-blk2 and 2-blk2, and 1-blk3 and 2-blk3.

Step 703: The first device performs data processing on each slice pair based on a data similarity of each of the plurality of slice pairs to obtain upgrade package data corresponding to each slice pair, where the data processing includes at least skip processing, XOR processing, or differential processing.

Skip processing means that data of a corresponding slice pair is not processed, and upgrade package data that corresponds to a slice pair and that is obtained through skip processing is empty. XOR processing refers to data processing performed by using XOR logic. The XOR logic refers to outputting a first value when two pieces of data are the same, and outputting a second value when two pieces of data are different. For example, XOR processing is performed on data, at a corresponding bit, of two slices included in a slice pair. When data of the slice pair at a specific bit is the same, a corresponding bit of an XOR processing result is the first value. When data of the slice pair at a specific bit is different, a corresponding bit of the XOR processing result is the second value. Differential processing refers to determining a data difference between two slices in a slice pair, that is, a result of differential processing is used to reflect a data difference of each slice pair.

In this embodiment of this application, to reduce a data amount of the upgrade package, differential processing may be performed on each slice pair based on the data similarity of each slice pair, instead of performing fixed differential processing on each slice pair. For example, if data is the same, skip processing is performed; if data is highly similar, XOR processing is performed; or if data is significantly different, differential processing is performed. In this way, a relatively matched data processing result can be used to indicate data correlation between slice pairs based on the data similarity, so that a data amount of an upgrade package generated based on the data processing result is relatively small.

In an example, the plurality of slice pairs include a first slice pair, and the first slice pair includes a first slice in the first slice sequence and a second slice in the second slice sequence. An operation of performing data processing on each slice pair based on a data similarity of each slice pair to obtain upgrade package data corresponding to each slice pair may include the following several cases:
Case 1: If data of the first slice and the second slice is the same, skip processing is performed on the first slice pair, and upgrade package data corresponding to the first slice pair is empty.

That the upgrade package data corresponding to the first slice pair is empty means that the first slice pair has no corresponding upgrade package data.

For a slice pair with same data, the data of the slice pair may not be processed, and only a data processing type corresponding to the slice pair needs to be recorded. Therefore, upgrade package data corresponding to the slice pair is empty, that is, the slice pair has no corresponding upgrade package data.

Case 2: If data of the first slice and the second slice is different and a data similarity is greater than or equal to a first threshold, XOR processing is performed on the first slice pair to obtain first data, and upgrade package data corresponding to the first slice pair is determined based on the first data.

The first threshold may be preset, for example, set to a relatively high similarity threshold. When the data of the first slice and the second slice is different and the data similarity is greater than the first threshold, it indicates that the data of the first slice and the second slice is highly similar, and only a small part of the data is different. For example, the first threshold may be 80% or 90%.

For a slice pair whose data is highly similar, XOR processing may be performed on the slice pair. An XOR processing result is used to indicate which part of data is the same and which part of data is different in the slice pair.

In an example, an operation of performing XOR processing on the first slice pair to obtain first data includes: performing XOR processing on data of the first slice and the second slice at a corresponding byte location to obtain the first data.

If the data of the first slice and the second slice at the corresponding byte location is the same, data of the first data at the corresponding byte location is the first value. If the data of the first slice and the second slice at the corresponding byte location is different, data of the first data at the corresponding byte location is the second value.

The first data is an XOR processing result. Byte quantities of the first slice, the second slice, and the first data are usually the same. The first value in the first data is used to indicate that the data of the first slice pair at the corresponding byte location is the same, and the second value is used to indicate that the data of the first slice pair at the corresponding byte location is different. The first value and the second value may be preset, for example, the first value is 0, and the second value is 1.

To be specific, if data of the first slice and the second slice at a same byte location is the same, the first value is output at the same byte location of the first data. If data of the first slice and the second slice at a same byte location is different, the second value is output at the same byte location of the first data.

Generally, a processing object of XOR processing is usually binary data. If the data of the first slice pair is not binary data, the data of the first slice pair may be first converted into binary data, and then XOR processing is performed on the first slice pair converted into the binary data.

For example, an operation of performing XOR processing on data of the first slice and the second slice at a corresponding byte location to obtain the first data includes the following two cases:
(1) If both the data of the first slice and the data of the second slice are binary data, XOR processing is performed on binary values of the first slice and the second slice at the corresponding byte location to obtain the first data.

If the values in the first slice and the second slice at the corresponding byte location are the same, a value of the first data at the corresponding byte location is 0. If the values in the first slice and the second slice at the corresponding byte location are different, a value of the first data at the corresponding byte location is 1.

For example, if the data of the first slice is "1100" and the data of the second slice is "1101", the first data obtained by performing XOR processing on the first slice and the second slice is "0001". "0" in "0001" indicates that data of the first slice pair at a corresponding byte location is the same, and " 1" indicates that data of the first slice pair at a corresponding byte location is different.

(2) If the data of at least one of the first slice and the second slice is not binary data, data that is of a slice in the first slice and the second slice and that is not binary data is converted into binary data, and XOR processing is performed on binary values that are of the first slice and the second slice at the corresponding byte location and that are converted into binary data, to obtain the first data.

If the values that are of the first slice and the second slice at the corresponding byte location and that are converted into the binary data are the same, a value of the first data at the corresponding byte location is 0. If the values that are of the first slice and the second slice at the corresponding byte location and that are converted into the binary data are different, a value of the first data at the corresponding byte location is 1.

For example, if the data of the first slice and the second slice is hexadecimal data, the hexadecimal data corresponding to the first slice and the second slice may be first converted into binary data, and then XOR processing is performed on the first slice and the second slice that are converted into binary data.

The operation of determining upgrade package data corresponding to the first slice pair based on the first data may include any one of the following two implementations:

In a first implementation, the first data is determined as the upgrade package data corresponding to the first slice pair.

That is, the XOR processing result is directly used as the upgrade package data corresponding to the first slice pair. For example, if the first data is "0001 ", "0001" is directly used as the upgrade package data corresponding to the first slice pair.

In a second implementation, compression processing is performed on the first data to obtain third data, and the third data is determined as the upgrade package data corresponding to the first slice pair.

That is, the XOR processing result is first compressed, and then a compressed XOR processing result is used as the upgrade package data corresponding to the first slice pair.

In an example, when the first data is binary data, compression processing may be performed on 0 in the first data to obtain the third data. For example, if the first data is "0001", 0 in the first data "0001" is compressed to obtain the third data "1". In this way, a data amount can be reduced, thereby reducing space occupied by data and improving data transmission efficiency.

After compression processing is performed on 0 in the first data, the obtained third data includes 1, and does not include 0. In addition, the third data may further include byte location information of the compressed-out 0 or byte location information corresponding to a remaining 1, to indicate that data at which byte locations is compressed out, so that the compressed third data is subsequently decompressed based on the information to obtain the first data.

It should be understood that compression processing may alternatively be performed on the first data in another compression manner.

Case 3: If a data similarity between the first slice and the second slice is less than the first threshold, differential processing is performed on the first slice pair to obtain second data, and upgrade package data corresponding to the first slice pair is determined based on the second data.

If the data similarity between the first slice and the second slice is less than the first threshold, it indicates that a data difference between the first slice and the second slice is relatively large. In this case, differential processing may be performed on the first slice pair, to indicate the data difference of the first slice pair by using a differential processing result.

The second data is the differential processing result, namely, a differential file of the first slice pair.

The determining upgrade package data corresponding to the first slice pair based on the second data may include any one of the following two implementations:

In a first implementation, the second data is determined as the upgrade package data corresponding to the first slice pair.

That is, the differential processing result is directly used as the upgrade package data corresponding to the first slice pair.

In a second implementation, compression processing is performed on the second data to obtain fourth data, and the fourth data is determined as the upgrade package data corresponding to the first slice pair.

That is, the differential processing result is first compressed, and then a compressed differential processing result is used as the upgrade package data corresponding to the first slice pair. A compression algorithm for performing compression processing on the second data may be preset based on a requirement. This is not limited in this embodiment of this application.

The data processing is performed on each slice pair of slices at a same ranking in the first slice sequence and the second slice sequence, to obtain upgrade package data corresponding to the plurality of slice pairs. Upgrade package data corresponding to a slice pair whose corresponding data processing type is skip processing is empty, that is, the slice pair whose corresponding data processing type is skip processing has no corresponding upgrade package data.

Step 704: The first device generates an upgrade package based on a slice sequence number of each of the plurality of slice pairs, and a data processing type and the upgrade package data that correspond to each slice pair, where the upgrade package includes upgrade package data corresponding to a plurality of slice sequence numbers and data processing type information corresponding to each slice sequence number.

The data processing type information is used to indicate a data processing type used to perform data processing on a corresponding slice pair. The data processing type includes skip processing, XOR processing, or differential processing.

After the upgrade package data corresponding to each slice pair is obtained, a data processing type and upgrade package data that correspond to a slice pair indicated by each of the plurality of slice sequence numbers may be packaged into the upgrade package, to generate the upgrade package. The plurality of slice sequence numbers are slice sequence numbers of the plurality of slice pairs.

In an example, a slice sequence number of the first slice sequence or the second slice sequence may be represented by using 0-n-1, where n is a slice quantity of the slice sequence. It should be understood that the slice sequence number of the slice sequence may alternatively be represented in another manner, for example, is represented by using 1-n. This is not limited in this embodiment of this application.

In an example, an operation of generating an upgrade package based on a slice sequence number of each slice pair, and a data processing type and the upgrade package data that correspond to each slice pair includes: writing the upgrade package data corresponding to the slice pair indicated by each of the plurality of slice sequence numbers into data information of an initial data packet, and writing, into header information of the initial data packet, the data processing type corresponding to the slice pair indicated by each slice sequence number and storage location information that is in the data information of the initial data packet and that is of the upgrade package data corresponding to the slice pair indicated by each slice sequence number, where an initial data packet obtained after data writing is the upgrade package, and the plurality of slice sequence numbers are the slice sequence numbers of the plurality of slice pairs.

For example, the upgrade package data corresponding to each slice pair is written into the data information of the initial data packet. The slice sequence number of each slice pair, the data processing type corresponding to each slice pair, and the storage location information of the upgrade package data corresponding to each slice pair in the data information of the initial data packet are written into the header information of the initial data packet. The initial data packet obtained after data writing is the upgrade package. Both upgrade package data corresponding to a slice pair whose corresponding data processing type is skip processing and storage location information corresponding to the upgrade package data are empty.

The storage location information that is in the data information of the initial data packet and that is of the upgrade package data corresponding to the slice pair indicated by each slice sequence number is used to indicate a storage location that is in the data information of the initial data packet and that is of the upgrade package data corresponding to the slice pair indicated by each slice sequence number. For example, the storage location information of the upgrade package data corresponding to each slice pair in the data information of the initial data packet may be an incremental offset of the upgrade package data corresponding to each slice pair in the data information of the initial data packet.

In this way, the header information of the generated upgrade package stores the data processing type corresponding to each of the plurality of slice sequence numbers and the storage location information of the upgrade package data corresponding to each slice sequence number in data information of the upgrade package. The data information of the upgrade package stores the upgrade package data corresponding to each slice sequence number. Storage location information of upgrade package data corresponding to a slice sequence number whose corresponding data processing type is skip processing is empty, that is, the slice sequence number whose data processing type is skip processing has no corresponding upgrade package data, or storage location information of the corresponding upgrade package data in the upgrade package.

In addition, the plurality of slice sequence numbers may be further written into the header information of the initial data packet. For example, the plurality of slice sequence numbers, the data processing type corresponding to each slice sequence number, and the storage location information of the upgrade package data corresponding to each slice sequence number in the data information of the upgrade package are correspondingly written into the header information of the initial data packet. In this way, the corresponding data processing type and the upgrade package data can be indicated by using the slice sequence number.

In addition, a slice size may be further written into the header information of the initial data packet, so that the header information of the generated upgrade package further includes the slice size. Further, a slice quantity may be further written into the header information of the initial data packet, so that the header information of the generated upgrade package further includes the slice quantity.

By writing the slice size and/or the slice quantity into the header information, when a terminal device that receives the upgrade package performs restoration and installation, it is convenient to slice, based on the slice size and/or the slice quantity in the header information, an old version of an installation package stored in the terminal device, to obtain a slice sequence corresponding to the plurality of slice sequence numbers in the upgrade package.

The slice size is sizes of slices in the first slice sequence and the second slice sequence. The slice quantity is a quantity of slice pairs of slices at same rankings in the first slice sequence and the second slice sequence. For example, a slice size of each slice in the first slice sequence and the second slice sequence is a preset size, and a slice size written into the header information is the preset size. A slice quantity of the first slice sequence is the same as a slice quantity of the second slice sequence, and both are a preset quantity, and a slice quantity written into the header information is the preset quantity.

By presetting the slice size and the slice quantity, a new version and the old version of installation packages may be sliced based on the preset slice size and the preset slice quantity when the upgrade package is prepared, to ensure that slice sizes and slice quantities of the new version and the old version of the slice sequences are aligned. It is convenient to subsequently perform processing based on each aligned slice pair in the new version and the old version of the slice sequences, to generate the upgrade package. In addition, by writing the preset slice size and the preset slice quantity into the header information, it is also convenient to slice, based on the preset slice size and the preset slice quantity in the header information, the old version of the installation package stored in the terminal device when the terminal device that receives the upgrade package performs the restoration and installation, to obtain the slice sequence corresponding to the plurality of slice sequence numbers in the upgrade package. It is convenient to subsequently restore the new version of the installation package based on upgrade package data and slice data with a same sequence number.

For example, the header information of the upgrade package may be represented in the following format:

```
          block_size
          block_num
          struct_ctrl {
              operate_type
              {blk_no,offset}
          }
```

In the format, block size is a slice size, block_num is a slice quantity, operate_type is a data processing type, and blk_no and offset are respectively a slice sequence number corresponding to this data processing type and an incremental offset of corresponding upgrade package data in the upgrade package.

Different data processing types may be represented by using different data processing type identifiers. For example, the following data processing type identifiers may be used to identify the different data processing types:

```
          operate_type {
          skip(skip processing)=0
          xor(XOR processing)=1
          diff(differential processing)=2
          }
```

It is assumed that the first slice sequence includes four slices: 1-blk0, 1-blk1, 1-blk2, and 1-blk3. The second slice sequence also includes four slices: 2-blk0, 2-blk1, 2-blk2, and 2-blk3. A slice size of each slice is 16k. A data processing type corresponding to a first slice pair "1-blk0 and 2-blk0" whose slice sequence number is 0 is skip processing, and a data processing type identifier of skip processing is 0. Data processing types corresponding to a second slice pair " 1-blk1 and 2-blk1" whose slice sequence number is 1 and a fourth slice pair " 1-blk3 and 2-blk3" whose slice sequence number is 3 are XOR processing, and a data processing type identifier of XOR processing is 1. Incremental offsets of upgrade package data corresponding to the second slice pair and the fourth slice pair in the upgrade package are respectively 10 and 8. A data processing type corresponding to a third slice pair "1-blk2 and 2-blk2" whose slice sequence number is 2 is differential processing, a data processing type identifier of differential processing is 2, and an incremental offset of upgrade package data corresponding to the third slice pair in the upgrade package is 5. In this case, the header information of the upgrade package may be as follows:

```
          block_size=16k
          block_num=4
          struct_ctrl {
              {0,0},{1,{1,10},{3,8}},{2,{2,5}}
              }
```

In addition, if slice quantities of two slice sequences obtained after the first installation package and the second installation package are sliced according to a same slicing rule are different, a specific quantity of blank slices may be supplemented at a sequence end of a slice sequence with a relatively small slice quantity, to obtain a first slice sequence and a second slice sequence with a same slice quantity.

For the first slice sequence and the second slice sequence with the same slice quantity that are obtained by supplementing the blank slice, in each slice pair of slices at a same ranking in the first slice sequence and the second slice sequence, data is stored in two slices in some slice pairs. For ease of description, this type of slice pair is referred to as a first-type slice pair. However, only one slice in some slice pairs stores data and data of the other slice is empty. For ease of description, this type of slice pair is referred to as a second-type slice pair. A data similarity of the second-type slice pair is very low.

In this embodiment of this application, data processing may be further performed on each slice pair based on the data similarity of each slice pair and a slice pair category to which each slice pair belongs, to obtain the upgrade package data corresponding to each slice pair. In addition to skip processing, XOR processing, or differential processing, the data processing may further include copy processing or deletion processing. The slice pair category includes the first-type slice pair or the second-type slice pair.

Copy processing refers to copying a slice in a corresponding slice pair that belongs to the second slice sequence, to obtain upgrade package data corresponding to the slice pair. Deletion processing also means that data of a corresponding slice pair is not processed, and upgrade package data corresponding to the slice pair obtained through deletion processing is also empty.

For example, for the first slice pair at the same ranking in the first slice sequence and the second slice sequence, if the data of the first slice pair is the same and the first slice pair belongs to the first-type slice pair, skip processing is performed on the first slice pair, and the upgrade package data corresponding to the first slice pair is empty. If the data of the first slice pair is different, the data similarity is greater than or equal to the first threshold, and the first slice pair belongs to the first-type slice pair, XOR processing is performed on the first slice pair to obtain the first data, and the upgrade package data corresponding to the first slice pair is determined based on the first data. If the data similarity corresponding to the first slice pair is less than the first threshold and the first slice pair belongs to the first-type slice pair, differential processing is performed on the first slice pair to obtain the second data, and the upgrade package data corresponding to the first slice pair is determined based on the second data.

In addition, if the data similarity corresponding to the first slice pair is less than the first threshold, the first slice pair belongs to the second-type slice pair, and a blank slice in the first slice pair belongs to the first slice sequence, it indicates that the second installation package adds some data compared with the first installation package, copy processing may be performed on the first slice pair, that is, a slice that belongs to the second slice sequence and that is in the first slice pair is copied, to obtain the upgrade package data corresponding to the first slice pair.

If the data similarity corresponding to the first slice pair is less than the first threshold, the first slice pair belongs to the second-type slice pair, and a blank slice in the first slice pair belongs to the second slice sequence, it indicates that some data is deleted from the second installation package compared with the first installation package. In this case, deletion processing may be performed on the first slice pair, and the upgrade package data corresponding to the first slice pair is empty.

In this way, the generated upgrade package includes the data processing type and the upgrade package data that correspond to each of the plurality of slice sequence numbers. The data processing type corresponding to each slice sequence number is skip processing, XOR processing, differential processing, copy processing, or deletion processing. The upgrade package data whose corresponding data processing types are skip processing and deletion processing is empty, that is, slice sequence numbers whose corresponding data processing types are skip processing and deletion processing have no corresponding upgrade package data. Correspondingly, if the header information of the upgrade package includes the storage location information of the upgrade package data corresponding to each slice sequence number in the data information of the upgrade package, storage location information corresponding to slice sequence numbers whose corresponding data processing types are skip processing and deletion processing is empty, that is, the slice sequence numbers whose corresponding data processing types are skip processing and deletion processing have no corresponding storage location information.

It should be noted that the generated upgrade package may indicate an association relationship between the first installation package and the second installation package. Specifically, the upgrade package may indicate which slice pairs in corresponding slice sequences have same data, data of which slice pairs is highly similar, a data difference of which slice pairs is relatively large, which data is the same and which data is different in a slice pair with highly similar data, and a differential file of a slice pair with a relatively large data difference.

Step 705: The first device sends the upgrade package to the fourth device.

The first device may directly send the upgrade package to the fourth device, or may forward the upgrade package to the fourth device by using another device. This is not limited in this embodiment of this application. For example, referring to FIG. 1, the first device may first upload the upgrade package to the second device. Then, the third device downloads the upgrade package from the second device, and forwards the downloaded upgrade package to the fourth device. Alternatively, the fourth device may download the upgrade package from the second device.

In addition, the first device may first compress the upgrade package to obtain a compressed package of the upgrade package, and then send the compressed package of the upgrade package to the fourth device. For example, referring to FIG. 1, the first device may compress the upgrade package, upload the compressed package of the upgrade package to the second device. Then, the third device downloads the compressed package of the upgrade package from the second device, and forwards the downloaded compressed package of the upgrade package to the fourth device. Alternatively, after downloading the compressed package of the upgrade package from the second device, the third device may first decompress the compressed package to obtain the upgrade package, and then send the decompressed upgrade package to the fourth device. Alternatively, the fourth device may download the compressed package of the upgrade package from the second device.

Step 706: The fourth device receives the upgrade package from the first device.

In an example, the fourth device may receive the compressed package of the upgrade package, and decompress the compressed package to obtain the upgrade package. It should be understood that the fourth device may alternatively obtain the upgrade package in another manner. This is not limited in this embodiment of this application.

Step 707: The fourth device generates the second installation package based on the upgrade package and the stored first installation package.

The upgrade package is generated based on the first installation package and the second installation package, and may indicate the association relationship between the first installation package and the second installation package. Therefore, after obtaining the upgrade package, the fourth device can restore the second installation package based on the upgrade package and the stored first installation package.

In an example, an operation of generating the second installation package based on the upgrade package and the stored first installation package may include the following steps:

(1) Restoration processing is performed on a slice corresponding to each slice sequence number based on the data processing type corresponding to each of the plurality of slice sequence numbers, to obtain installation package data corresponding to each slice sequence number.

The data processing type corresponding to each slice sequence number includes at least skip processing, XOR processing, or differential processing. When data processing types are different, restoration processing manners are different.

Specifically, based on the different data processing types, the performing restoration processing on a slice corresponding to each slice sequence number based on the data processing type corresponding to each of the plurality of slice sequence numbers may include the following several cases:
Case 1: When the data processing type corresponding to each slice sequence number is skip processing, copy processing is performed on a slice corresponding to each slice sequence number in the first slice sequence, to obtain the installation package data corresponding to each slice sequence number.

The first slice sequence is obtained by performing slice processing on an old version of an installation package stored in the second device.

To be specific, if data of a slice pair indicated by the first slice sequence number is the same, slice data in the first slice sequence at a corresponding location may be directly used as slice data of a new version of an installation package at the corresponding location. For example, if a data processing type corresponding to a slice sequence number 0 is skip processing, slice data corresponding to the slice sequence number 0 in the first slice sequence is used as installation package data corresponding to the slice sequence number 0.

Case 2: When the data processing type corresponding to each slice sequence number is XOR processing, XOR processing is performed on the upgrade package data corresponding to each slice sequence number and a slice corresponding to each slice sequence number in the first slice sequence, to obtain the installation package data corresponding to each slice sequence number.

For a specific XOR processing manner, refer to related descriptions in the foregoing embodiments. Details are not described herein again in this embodiment of this application. For example, if a data processing type corresponding to a slice sequence number 1 is XOR processing, upgrade package data corresponding to the slice sequence number 1 is "0001", and slice data corresponding to the slice sequence number 1 in the first slice sequence is " 1100", XOR processing is performed on "0001" and "1100" to obtain installation package data corresponding to the slice sequence number 1, which is "1101".

Case 3: When the data processing type corresponding to each slice sequence number is differential processing, inverse differential processing is performed on the upgrade package data corresponding to each slice sequence number and a slice corresponding to each slice sequence number in the first slice sequence, to obtain the installation package data corresponding to each slice sequence number.

The inverse differential processing is a reverse operation of differential processing, and is used to restore an original file based on the differential file.

For example, if a data processing type corresponding to a slice sequence number 2 is differential processing, restoration processing is performed on upgrade package data corresponding to the slice sequence number 2 and slice data corresponding to the slice sequence number 2 in the first slice sequence, to obtain installation package data corresponding to the slice sequence number 2.

In an example, if the header information of the upgrade package stores the data processing type corresponding to each of the plurality of slice sequence numbers and the storage location information of the upgrade package data corresponding to each of the plurality of slice sequence numbers in the data information of the upgrade package, the data information of the upgrade package stores the upgrade package data corresponding to each of the plurality of slice sequence numbers. Before the installation package data corresponding to each slice sequence number is obtained, the data processing type corresponding to each of the plurality of slice sequence numbers and the storage location information of the upgrade package data corresponding to each of the plurality of slice sequence numbers in the data information of the upgrade package may be first obtained from the header information of the upgrade package. The upgrade package data corresponding to each slice sequence number is obtained from the data information of the upgrade package based on the storage location information of the upgrade package data corresponding to each slice sequence number in the data information of the upgrade package. Then, restoration processing is performed on the slice corresponding to each slice sequence number based on the data processing type corresponding to each slice sequence number, to obtain the installation package data corresponding to each slice sequence number.

In addition, if the data processing type corresponding to each slice sequence number in the upgrade package may further include copy processing or deletion processing, an operation of performing restoration processing on a slice corresponding to each slice sequence number based on the data processing type corresponding to each of the plurality of slice sequence numbers further includes the following Case 4 and Case 5.

Case 4: When the data processing type corresponding to each slice sequence number is copy processing, upgrade package data corresponding to the first slice sequence number is copied to obtain installation package data corresponding to the first slice sequence number, so that the upgrade package data corresponding to the first slice sequence number that is added to the first installation package is inserted into the second installation package.

Case 5: When the data processing type corresponding to each slice sequence number is deletion processing, XOR processing and skip processing are performed on the upgrade package data corresponding to each slice sequence number and a slice corresponding to each slice sequence number in the first slice sequence, and obtained upgrade package data corresponding to the first slice sequence number is empty, so that slice data of a corresponding slice sequence number in the first installation package is deleted.

In addition, before the second installation package is generated, the stored first installation package may be first sliced to obtain the first slice sequence. In an example, the header information of the upgrade package includes the slice size, and the first installation package may be sliced based on the slice size, so that the size of each slice in the first slice sequence is the slice size. In another example, the header information of the upgrade package includes the slice size and the slice quantity. The first installation package may be sliced based on the slice size and the slice quantity, so that the size of each slice in the first slice sequence is the slice size, and a quantity of slices included in the first slice sequence is the slice quantity.

(2) The second installation package is generated based on installation package data corresponding to the plurality of slice sequence numbers.

For example, the installation package data corresponding to the plurality of slice sequence numbers may be concatenated to obtain the second installation package.

Step 708: The fourth device installs the second installation package.

A version update can be implemented by installing the second installation package.

In this embodiment of this application, when the upgrade package is prepared, the new version and the old version of the installation packages may be first sliced. Then, differential processing, XOR processing, or skip processing is performed on each slice pair based on the data similarity of each slice pair corresponding to the new version and the old version. For example, skip processing is performed when data is the same, XOR processing is performed when the data similarity is relatively high, or differential processing is performed when the data similarity is relatively low, instead of performing differential processing on all slice pairs corresponding to the new version and the old version. By performing different processing based on the data similarity of the slice pair, a deficiency of performing differential processing on all the slice pairs can be overcome, a data amount of the upgrade package is reduced to a relatively large extent, and an upgrade package with a relatively small data amount is generated. This further shortens download time of the upgrade package and lowers a requirement on storage resources of the terminal device.

In addition, when the upgrade package is installed, restoration processing may be performed on a slice corresponding to each slice sequence number based on the data processing type corresponding to each slice sequence number in the upgrade package, to restore the new version of the installation package. Then, the new version of the installation package is installed. Because the data amount of the upgrade package is relatively small, a quantity of storage resources required for restoring and installing the upgrade package is also relatively small. This lowers a requirement on storage resources of the terminal device, and is suitable for a version update of a terminal device with a relatively small memory. In addition, restoration processing in different forms may be performed on the slices corresponding to the slice sequence numbers based on the different data processing types corresponding to the slice sequence numbers. For example, copy processing is performed when the data processing type is skip processing, XOR processing is performed when the data processing type is XOR processing, or inverse differential processing is performed when the data processing type is differential processing. In this way, the new version of the installation package can be accurately restored based on the upgrade package with the relatively small data amount, and a restoration and installation method adapted to the upgrade package with the relatively small data amount is proposed.

With reference to FIG. 3, upgrade package generation and installation methods provided in an embodiment of this application are described in detail below by using an example in which a device that prepares an upgrade package is a packaging server 21, a device that stores and delivers the upgrade package is a cloud server 22, a device that downloads the upgrade package is a mobile phone 23, and a device performing a version update is a headset 24.

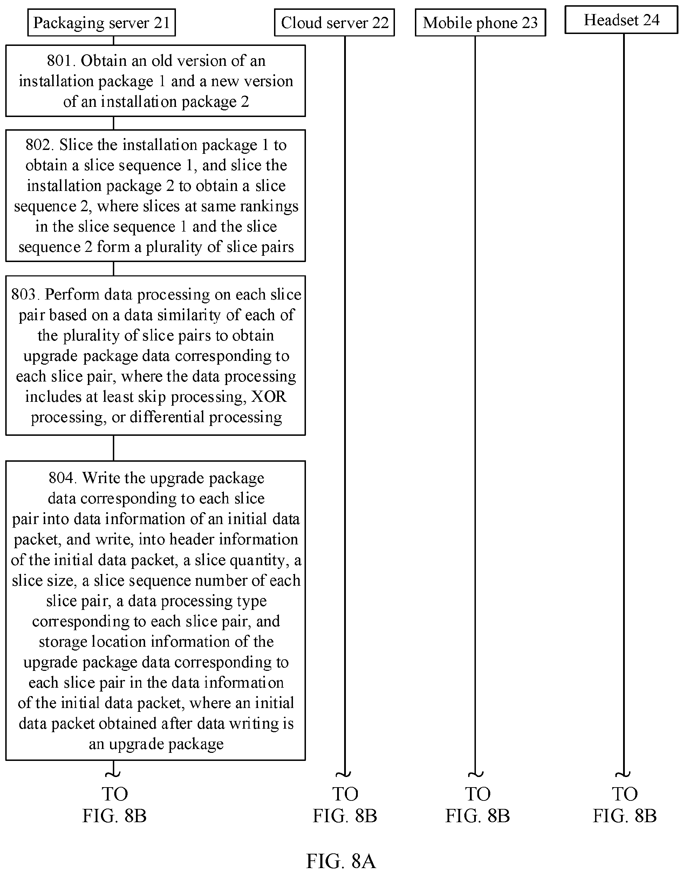

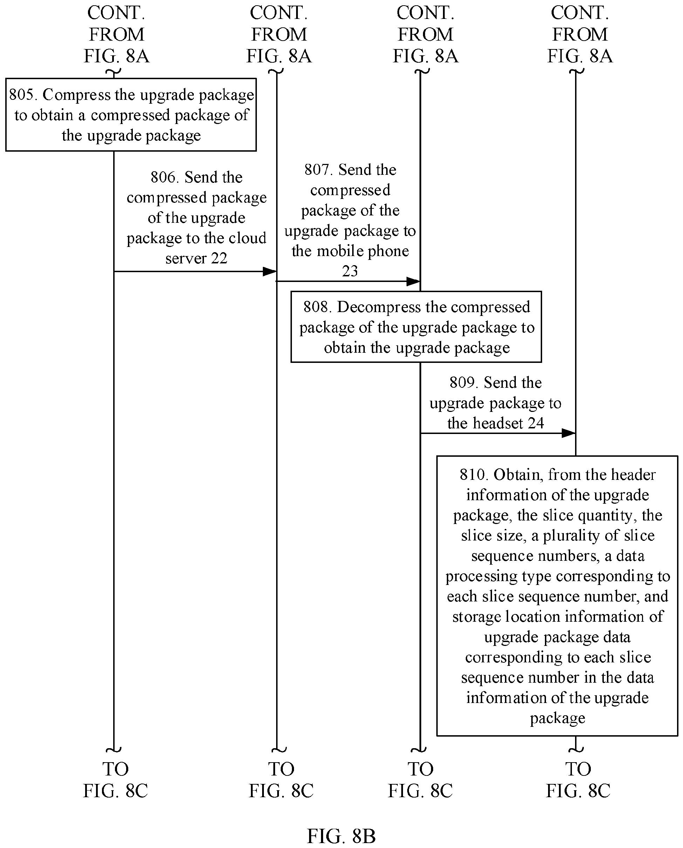

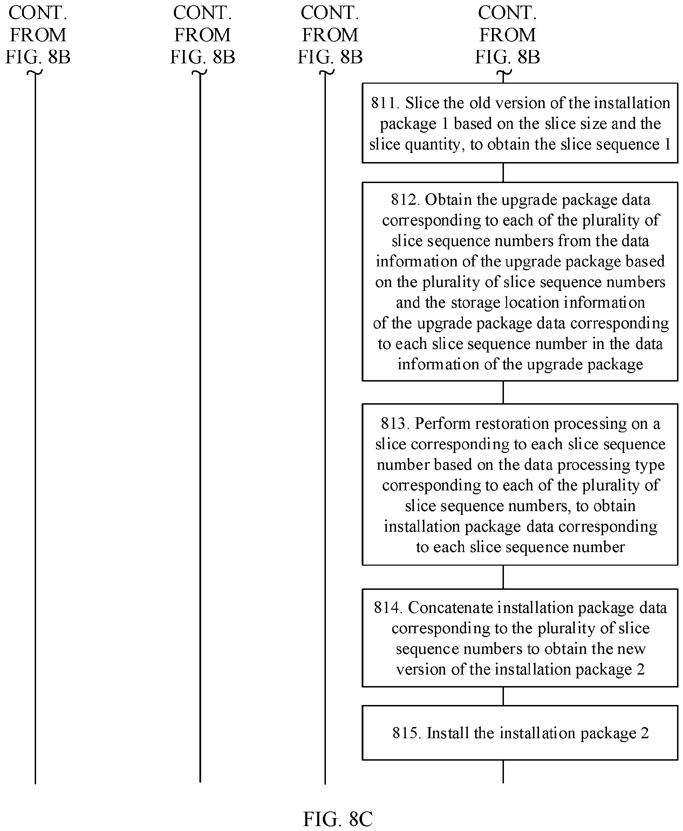

FIG. 8A to FIG. 8C are a schematic flowchart of updating a version of a device according to an embodiment of this application. As shown in FIG. 8A to FIG. 8C, the method includes the following steps:
Step 801: The packaging server 21 obtains an old version of an installation package 1 and a new version of an installation package 2.

The installation package 1 and the installation package 2 are different versions of installation packages of a to-be-upgraded object. In addition, a version of the installation package 2 is higher than a version of the installation package 1. The to-be-upgraded object may be an object whose version needs to be updated, such as a system or software.

Step 802: The packaging server 21 slices the installation package 1 to obtain a slice sequence 1, and slices the installation package 2 to obtain a slice sequence 2, where slices at same rankings in the slice sequence 1 and the slice sequence 2 form a plurality of slice pairs.

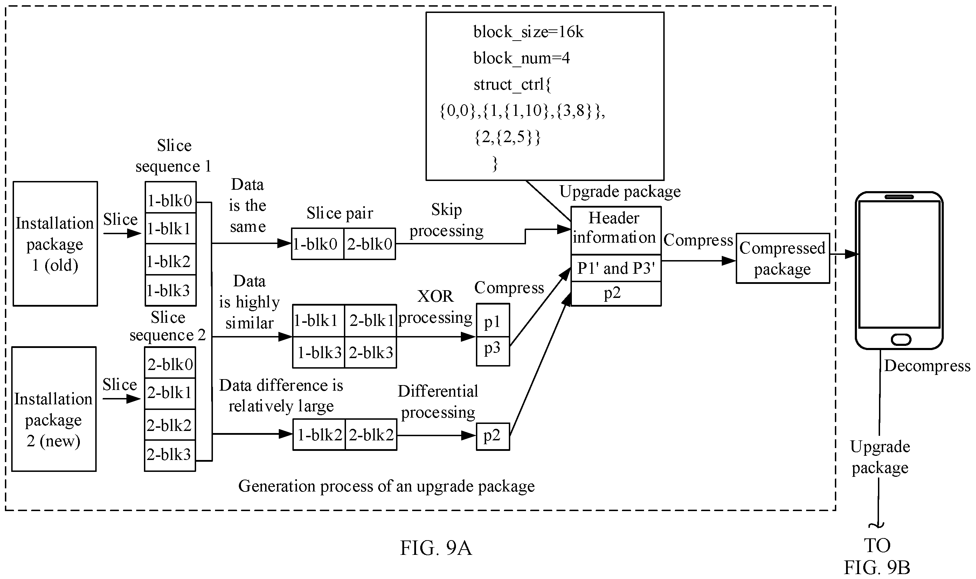

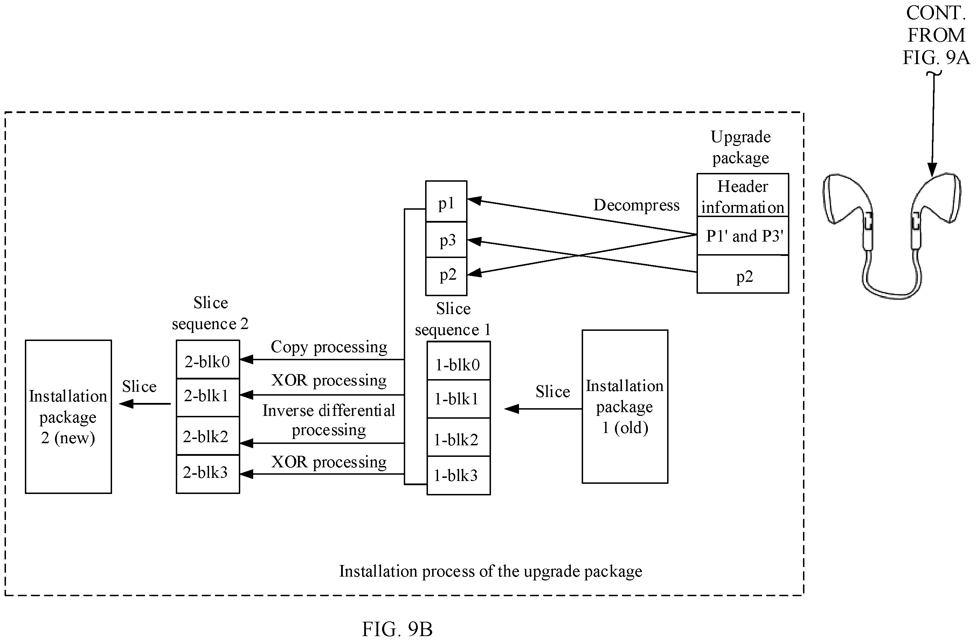

Reference is made to FIG. 9A and FIG. 9B. FIG. 9A and FIG. 9B are a schematic diagram of generation and installation processes of an upgrade package according to an embodiment of this application. As shown in FIG. 9A and FIG. 9B, in the generation process of the upgrade package, the installation package 1 and the installation package 2 may be sliced according to a same slicing rule. The slicing rule includes a slice size=16k, which is used to indicate that a slice size of each slice obtained through slicing is 16k. In addition, the slice sequence 1 obtained by slicing the installation package 1 includes four slices: 1-blk0, 1-blk1, 1-blk2, and 1-blk3. The slice sequence 2 obtained by slicing the installation package 2 also includes four slices: 2-blk0, 2-blk1, 2-blk2, and 2-blk3.

Step 803: The packaging server 21 performs data processing on each slice pair based on a data similarity of each of the plurality of slice pairs to obtain upgrade package data corresponding to each slice pair, where the data processing includes at least skip processing, XOR processing, or differential processing.

Skip processing means that data of a corresponding slice pair is not processed, and upgrade package data that corresponds to a slice pair and that is obtained through skip processing is empty.

If the data is the same, skip processing is performed; if the data is different and the data similarity is greater than or equal to a first threshold, XOR processing is performed; or if the data similarity is less than the first threshold, differential processing is performed.

Referring to FIG. 9A and FIG. 9B, if data of a slice pair "1-blk0 and 2-blk0" corresponding to a slice sequence number 0 is the same, skip processing is performed on "1-blk0 and 2-blk0", and upgrade package data corresponding to the slice sequence number 0 is empty, that is, the slice sequence number 0 has no corresponding upgrade package data. If a data similarity of a slice pair "1-blk1 and 2-blk1" corresponding to a slice sequence number 1 is greater than the first threshold, that is, data is highly similar, XOR processing is performed on "1-blk1 and 2-blk1" to obtain data p1. The data p1 is compressed to obtain upgrade package data p1' corresponding to the slice sequence number 1. If a data similarity of a slice pair "1-blk2 and 2-blk2" corresponding to a slice sequence number 2 is less than the first threshold, that is, a data difference is relatively large, differential processing is performed on "1-blk2 and 2-blk2", to obtain upgrade package data p2 corresponding to the slice sequence number 2. If a data similarity of a slice pair " 1-blk3 and 2-blk3" corresponding to a slice sequence number 3 is greater than the first threshold, that is, data is highly similar, XOR processing is performed on "1-blk3 and 2-blk3" to obtain data p3. The data p3 is compressed to obtain upgrade package data p3' corresponding to the slice sequence number 3.

Step 804: The packaging server 21 writes the upgrade package data corresponding to each slice pair into data information of an initial data packet, and writes, into header information of the initial data packet, a slice quantity, a slice size, a slice sequence number of each slice pair, a data processing type corresponding to each slice pair, and storage location information of the upgrade package data corresponding to each slice pair in the data information of the initial data packet, where an initial data packet obtained after data writing is an upgrade package.

The storage location information of the upgrade package data corresponding to each slice pair in the data information of the initial data packet may be an incremental offset of the upgrade package data corresponding to each slice pair in the data information of the initial data packet, or the like.

Referring to FIG. 9A and FIG. 9B, the upgrade package data p1' corresponding to the slice sequence number 1, the upgrade package data p2 corresponding to the slice sequence number 2, and the upgrade package data p3' corresponding to the slice sequence number 3 may be written into data information of the upgrade package. Incremental offsets of p1', p2', and p3' in the data information of the upgrade package are respectively 10, 5, and 8. In addition, the slice quantity, the slice size, a data processing type corresponding to the slice sequence number 0, data processing types corresponding to the slice sequences 1-3, and an incremental offset of the upgrade package data may be further written into header information of the upgrade package.

For example, the header information of the upgrade package includes the following content:

```
          block_size=16k
          block_num=4
          struct_ctrl {
              {0,0},{1,{1,10},{3,8}},{2,{2,5}}
              }
```

Step 805: The packaging server 21 compresses the upgrade package to obtain a compressed package of the upgrade package.

Step 806: The packaging server 21 sends the compressed package of the upgrade package to a cloud server 22.

That is, the packaging server 21 may upload the compressed package of the upgrade package to the cloud server 22.

It should be understood that the packaging server 21 may directly send the upgrade package to the cloud server 22 without compressing the upgrade package.

Step 807: The cloud server 22 sends the compressed package of the upgrade package to a mobile phone 23.

The cloud server 22 may actively push the compressed package of the upgrade package to the mobile phone 23, or may send the compressed package of the upgrade package to the mobile phone 23 based on a download request of the mobile phone 23. This is not limited in this embodiment of this application.

For example, the mobile phone 23 may send a version update request of a to-be-upgraded object to the cloud server 22, and the cloud server 22 sends the compressed package of the upgrade package to the mobile phone 23 based on the version update request.

Step 808: The mobile phone 23 decompresses the compressed package of the upgrade package to obtain the upgrade package.

Step 809: The mobile phone 23 sends the upgrade package to a headset 24.

The headset 24 is a device that is bound to the mobile phone 23 in advance. The mobile phone 23 is connected to the headset 24 by using a wireless local area network, for example, is connected to the headset 24 by using Bluetooth. For a to-be-upgraded object such as a system or software in the headset 24, an upgrade package of the to-be-upgraded object or a compressed package of the upgrade package may be downloaded by the mobile phone 23 from the cloud server 22, and then sent by the mobile phone 23 to the headset 24 by using the wireless local area network.

It should be understood that after receiving the compressed package of the upgrade package sent by the cloud server 22, the mobile phone 23 may not decompress the compressed package, but directly sends the compressed package to the headset 24. Alternatively, the mobile phone 23 may receive the upgrade package sent by the cloud server 22, and send the upgrade package to the headset 24.

Step 810: The headset 24 receives the upgrade package, and obtains, from the header information of the upgrade package, the slice quantity, the slice size, a plurality of slice sequence numbers, a data processing type corresponding to each slice sequence number, and storage location information of upgrade package data corresponding to each slice sequence number in the data information of the upgrade package.

Step 811: The headset 24 slices the old version of the installation package 1 based on the slice size and the slice quantity, to obtain the slice sequence 1.

Referring to FIG. 9A and FIG. 9B, in the installation process of the upgrade package, the slice sequence 1 obtained by slicing the installation package 1 includes four slices: 1-blk0, 1-blk1, 1-blk2, and 1-blk3.

It should be understood that the headset 24 may alternatively obtain the slice sequence 1 corresponding to the installation package 1 in another manner, for example, obtain the stored slice sequence 1 or obtain the slice sequence 1 from another device. This is not limited in this embodiment of this application.

Step 812: The headset 24 obtains the upgrade package data corresponding to each of the plurality of slice sequence numbers from the data information of the upgrade package based on the plurality of slice sequence numbers and the storage location information of the upgrade package data corresponding to each slice sequence number in the data information of the upgrade package.

After the upgrade package data corresponding to each slice sequence number is obtained, if upgrade package data corresponding to a specific slice sequence number is compressed data, the obtained upgrade package data may be further decompressed. Then, the following step 813 is performed based on the decompressed upgrade package data.

For example, referring to FIG. 9A and FIG. 9B, the upgrade package data p1' corresponding to the slice sequence number 1, the upgrade package data p2 corresponding to the slice sequence number 2, and the upgrade package data p3' corresponding to the slice sequence number 3 may be obtained from the data information of the upgrade package. Then, the upgrade package data p1' corresponding to the slice sequence number 1 is decompressed to obtain the data p1, and the upgrade package data p3' corresponding to the slice sequence number 3 is decompressed to obtain p3.

Step 813: The headset 24 performs restoration processing on a slice corresponding to each slice sequence number based on the data processing type corresponding to each of the plurality of slice sequence numbers, to obtain installation package data corresponding to each slice sequence number.

For example, if a data processing type corresponding to a specific slice sequence number is skip processing, copy processing is performed on a slice whose slice sequence number is the same in the slice sequence 1, to obtain installation package data corresponding to the slice sequence number. If a data processing type corresponding to a specific slice sequence number is XOR processing, XOR processing is performed on upgrade package data corresponding to the slice sequence number and a slice corresponding to a same slice sequence number in the slice sequence 1, to obtain installation package data corresponding to the slice sequence number. If a data processing type corresponding to a specific slice sequence number is differential processing, inverse differential processing is performed on upgrade package data corresponding to the slice sequence number and a slice corresponding to a same slice sequence number in the slice sequence 1, to obtain installation package data corresponding to the slice sequence number.

Referring to FIG. 9A and FIG. 9B, the data processing types corresponding to the slice sequence numbers 0~3 are respectively skip processing, XOR processing, differential processing, and XOR processing. Copy processing is performed on a slice of the slice sequence number 0 in the slice sequence 1 to obtain installation package data corresponding to the slice sequence number 0, namely, 2-blk0. XOR processing is performed on the decompressed upgrade package data p1 corresponding to the slice sequence number 1 and data of 1-blk1 in the slice sequence 1, to obtain installation package data corresponding to the slice sequence number 1, namely, 2-blk1. Inverse differential processing is performed on the upgrade package data p2 corresponding to the slice sequence number 2 and data of 1-blk2 in the slice sequence 1, to obtain installation package data corresponding to the slice sequence number 2, namely, 2-blk2. XOR processing is performed on the decompressed upgrade package data p3 corresponding to the slice sequence number 3 and data of 1-blk3 in the slice sequence 1, to obtain installation package data corresponding to the slice sequence number 3, namely, 2-blk3.

Step 814: The headset 24 concatenates installation package data corresponding to the plurality of slice sequence numbers to obtain the new version of the installation package 2.

Referring to FIG. 9A and FIG. 9B, 2-blk0, 2-blk1, 2-blk2, and 2-blk3 are concatenated to obtain the installation package 2.

Step 815: The headset 24 installs the installation package 2.

A version update can be implemented by installing a second installation package.

In this embodiment of this application, when the upgrade package is prepared, the new version and the old version of the installation packages may be first sliced. Then, differential processing, XOR processing, or skip processing is performed on each slice pair based on the data similarity of each slice pair corresponding to the new version and the old version. For example, skip processing is performed when data is the same, XOR processing is performed when the data similarity is relatively high, or differential processing is performed when the data similarity is relatively low, instead of performing differential processing on all slice pairs corresponding to the new version and the old version. By performing different processing based on the data similarity of the slice pair, a deficiency of performing differential processing on all the slice pairs can be overcome, a data amount of the upgrade package is reduced to a relatively large extent, and an upgrade package with a relatively small data amount is generated. This further shortens download time of the upgrade package and lowers a requirement on storage resources of a terminal device.

In addition, when the upgrade package is installed, restoration processing may be performed on a slice corresponding to each slice sequence number based on the data processing type corresponding to each slice sequence number in the upgrade package, to restore the new version of the installation package. Then, the new version of the installation package is installed. Because the data amount of the upgrade package is relatively small, a quantity of storage resources required for restoring and installing the upgrade package is also relatively small. This lowers a requirement on storage resources of the terminal device, and is suitable for a version update of a terminal device with a relatively small memory. In addition, restoration processing in different forms may be performed on the slices corresponding to the slice sequence numbers based on different data processing types corresponding to the slice sequence numbers. For example, copy processing is performed when the data processing type is skip processing, XOR processing is performed when the data processing type is XOR processing, or inverse differential processing is performed when the data processing type is differential processing. In this way, the new version of the installation package can be accurately restored based on the upgrade package with the relatively small data amount, and a restoration and installation method adapted to the upgrade package with the relatively small data amount is proposed.

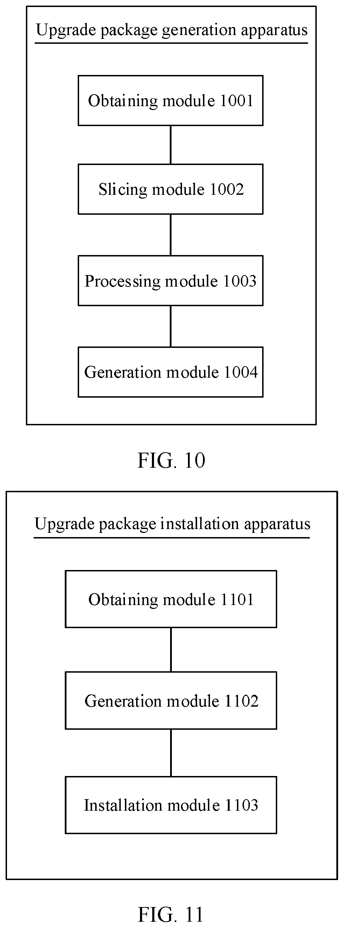

FIG. 10 is a schematic diagram of a structure of an upgrade package generation apparatus according to an embodiment of this application. The apparatus may be implemented as a part or all of a computer device by using software, hardware, or a combination thereof. The computer device may be the first device 11 shown in FIG. 1 or the packaging server 21 shown in FIG. 3. Referring to FIG. 10, the apparatus includes an obtaining module 1001, a slicing module 1002, a processing module 1003, and a generation module 1004.

The obtaining module 1001 is configured to perform step 701 in the foregoing embodiment of FIG. 7.

The slicing module 1002 is configured to perform step 702 in the foregoing embodiment of FIG. 7.

The processing module 1003 is configured to perform step 703 in the foregoing embodiment of FIG. 7.

The generation module 1004 is configured to perform step 704 in the foregoing embodiment of FIG. 7.

Optionally, a plurality of slice pairs include a first slice pair, and the first slice pair includes a first slice in a first slice sequence and a second slice in a second slice sequence. The processing module 1003 includes:
a first processing unit, configured to: if data of the first slice and the second slice is the same, perform skip processing on the first slice pair, where upgrade package data corresponding to the first slice pair is empty;
a second processing unit, configured to: if data of the first slice and the second slice is different and a data similarity is greater than or equal to a first threshold, perform XOR processing on the first slice pair to obtain first data, and determine upgrade package data corresponding to the first slice pair based on the first data; and
a third processing unit, configured to: if a data similarity between the first slice and the second slice is less than the first threshold, perform differential processing on the first slice pair to obtain second data, and determine upgrade package data corresponding to the first slice pair based on the second data.

Optionally, the second processing unit is configured to:
perform XOR processing on data of the first slice and the second slice at a corresponding byte location to obtain the first data.

Optionally, the second processing unit is configured to:
if both the data of the first slice and the data of the second slice are binary data, perform XOR processing on binary values of the first slice and the second slice at the corresponding byte location to obtain the first data, where if the values in the first slice and the second slice at the corresponding byte location are the same, a value of the first data at the corresponding byte location is 0; or if the values in the first slice and the second slice at the corresponding byte location are different, a value of the first data at the corresponding byte location is 1; or
if the data of at least one of the first slice and the second slice is not binary data, convert, into binary data, data that is of a slice in the first slice and the second slice and that is not binary data, and perform XOR processing on binary values that are of the first slice and the second slice at the corresponding byte location and that are converted into binary data, to obtain the first data, where if the values that are of the first slice and the second slice at the corresponding byte location and that are converted into the binary data are the same, a value of the first data at the corresponding byte location is 0; or if the values that are of the first slice and the second slice at the corresponding byte location and that are converted into the binary data are different, a value of the first data at the corresponding byte location is 1.

Optionally, the second processing unit is configured to:
determine the first data as the upgrade package data corresponding to the first slice pair; or
perform compression processing on the first data to obtain third data, and determine the third data as the upgrade package data corresponding to the first slice pair.

Optionally, the second processing unit is configured to:
perform compression processing on 0 in the first data to obtain the third data.

Optionally, the third processing unit is configured to:
determine the second data as the upgrade package data corresponding to the first slice pair;
   or
perform compression processing on the second data to obtain fourth data, and determine the fourth data as the upgrade package data corresponding to the first slice pair.

Optionally, the generation module 1004 is configured to:
write upgrade package data corresponding to a slice pair indicated by each of a plurality of slice sequence numbers into data information of an initial data packet, and write, into header information of the initial data packet, a data processing type corresponding to the slice pair indicated by each slice sequence number and storage location information that is in the data information of the initial data packet and that is of the upgrade package data corresponding to the slice pair indicated by each slice sequence number, where an initial data packet obtained after data writing is the upgrade package, and the plurality of slice sequence numbers are slice sequence numbers of the plurality of slice pairs.

Optionally, the generation module 1004 is further configured to:
write a quantity of slice pairs of slices at same rankings in the first slice sequence and the second slice sequence, and slice sizes of slices in the first slice sequence and the second slice sequence into the header information of the initial data packet.

Optionally, both a slice quantity of the first slice sequence and a slice quantity of the second slice sequence are a preset quantity, and the quantity that is of the slice pairs of the slices at the same rankings and that is written into the header information is the preset quantity. A slice size of each slice in the first slice sequence and the second slice sequence is a preset size, and the slice sizes that are of the slices in the first slice sequence and the second slice sequence and that are written into the header information are the preset size.

Optionally, the storage location information that is in the data information of the initial data packet and that is of the upgrade package data corresponding to the slice pair indicated by each slice sequence number is an incremental offset that is in the data information of the initial data packet and that is of the upgrade package data corresponding to the slice pair indicated by each slice sequence number.

In this embodiment of this application, when the upgrade package is prepared, a new version and an old version of installation packages may be first sliced. Then, differential processing, XOR processing, or skip processing is performed on each slice pair based on the data similarity of each slice pair corresponding to the new version and the old version. For example, skip processing is performed when data is the same, XOR processing is performed when the data similarity is relatively high, or differential processing is performed when the data similarity is relatively low, instead of performing differential processing on all slice pairs corresponding to the new version and the old version. By performing different processing based on the data similarity of the slice pair, a deficiency of performing differential processing on all the slice pairs can be overcome, a data amount of the upgrade package is reduced to a relatively large extent, and an upgrade package with a relatively small data amount is generated. This further shortens download time of the upgrade package and lowers a requirement on storage resources of a terminal device.

FIG. 11 is a schematic diagram of a structure of an upgrade package installation apparatus according to an embodiment of this application. The apparatus may be implemented as a part or all of a computer device by using software, hardware, or a combination thereof. The computer device may be the third device 13 or the fourth device 14 shown in FIG. 1, or the mobile phone 23 or the headset 24 shown in FIG. 3. Referring to FIG. 11, the apparatus includes an obtaining module 1101, a generation module 1102, and an installation module 1103.

The obtaining module 1101 is configured to obtain an upgrade package, where the upgrade package includes upgrade package data corresponding to a plurality of slice sequence numbers and data processing type information corresponding to each slice sequence number.

The generation module 1102 is configured to perform step 707 in the foregoing embodiment of FIG. 7.

The installation module 1103 is configured to perform step 708 in the foregoing embodiment of FIG. 7.

Optionally, the generation module 1102 includes a first generation unit and a second generation unit.

The first generation unit is configured to: perform restoration processing on a slice corresponding to each slice sequence number based on a data processing type corresponding to each of the plurality of slice sequence numbers, to obtain installation package data corresponding to each slice sequence number; and
when the data processing type corresponding to each slice sequence number is skip processing, perform copy processing on a slice corresponding to each slice sequence number in a first slice sequence, to obtain the installation package data corresponding to each slice sequence number, where the first slice sequence is obtained by performing slice processing on a first installation package stored in a second device;
when the data processing type corresponding to each slice sequence number is XOR processing, perform XOR processing on upgrade package data corresponding to each slice sequence number and a slice corresponding to each slice sequence number in the first slice sequence, to obtain the installation package data corresponding to each slice sequence number; or
when the data processing type corresponding to each slice sequence number is differential processing, perform inverse differential processing on upgrade package data corresponding to each slice sequence number and a slice corresponding to each slice sequence number in the first slice sequence, to obtain the installation package data corresponding to each slice sequence number.

The second generation unit is configured to generate a second installation package based on installation package data corresponding to the plurality of slice sequence numbers.

Optionally, the plurality of slice sequence numbers are slice sequence numbers of a plurality of slice pairs including slices at same rankings in the first slice sequence and a second slice sequence, the second slice sequence is obtained by slicing the second installation package whose version is higher than that of the first installation package, the upgrade package data corresponding to each of the plurality of slice sequence numbers is obtained by performing data processing on a corresponding slice pair based on a data similarity of the corresponding slice pair, the data processing includes at least skip processing, XOR processing, or differential processing, and upgrade package data whose corresponding data processing type is skip processing is empty.

Optionally, the second generation unit is configured to concatenate the installation package data corresponding to the plurality of slice sequence numbers to obtain the second installation package.

Optionally, header information of the upgrade package includes the data processing type corresponding to each of the plurality of slice sequence numbers and storage location information of the upgrade package data corresponding to each of the plurality of slice sequence numbers in data information of the upgrade package, and the data information of the upgrade package stores the upgrade package data corresponding to each of the plurality of slice sequence numbers.

The generation module 1102 further includes an obtaining unit, configured to:
obtain, from the header information of the upgrade package, the data processing type corresponding to each of the plurality of slice sequence numbers and the storage location information of the upgrade package data corresponding to each of the plurality of slice sequence numbers in the data information of the upgrade package; and
obtain the upgrade package data corresponding to each slice sequence number from the data information of the upgrade package based on the storage location information of the upgrade package data corresponding to each slice sequence number in the data information of the upgrade package.

Optionally, the header information of the upgrade package further includes a slice size, and the apparatus further includes a slicing module.

The slicing module is configured to slice the first installation package based on the slice size to obtain the first slice sequence.

Optionally, the obtaining module 1101 is configured to:
obtain a compressed package of the upgrade package, where the compressed package is obtained by compressing the upgrade package; and
decompress the compressed package to obtain the upgrade package.

In this embodiment of this application, when the upgrade package is installed, a new version of an installation package can be restored based on the data processing type and the upgrade package data that correspond to each slice sequence number in the upgrade package and slice data with a same slice sequence number in an old version of an installation package. Then, the new version of the installation package is installed. Because a data amount of the upgrade package is relatively small, a quantity of storage resources required for restoring and installing the upgrade package is also relatively small. This lowers a requirement on storage resources of a terminal device, and is suitable for a version update of a terminal device with a relatively small memory. In addition, restoration processing in different forms may be performed on the slices corresponding to the slice sequence numbers based on different data processing types corresponding to the slice sequence numbers. For example, copy processing is performed when the data processing type is skip processing, XOR processing is performed when the data processing type is XOR processing, or inverse differential processing is performed when the data processing type is differential processing. In this way, the new version of the installation package can be accurately restored based on the upgrade package with the relatively small data amount. A restoration and installation method adapted to the upgrade package generated according to the upgrade package generation method in the first aspect is proposed.

It should be noted that, when the upgrade package generation apparatus provided in the foregoing embodiment generates the upgrade package, and when the upgrade package installation apparatus provided in the foregoing embodiment installs the upgrade package, division of the foregoing functional modules is merely used as an example for description. In actual application, the foregoing functions may be allocated to different functional modules based on a requirement for implementation, to be specific, an internal structure of the apparatus is divided into different functional modules, to complete all or some of the functions described above.

Functional units and modules in the foregoing embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely for the purpose of distinguishing between each other, and are not used to limit the protection scope of the embodiments of this application.

The upgrade package generation apparatus provided in the foregoing embodiment and the upgrade package generation method embodiment belong to a same concept. The upgrade package installation apparatus provided in the foregoing embodiment and the upgrade package installation method embodiment belong to a same concept. For specific working processes and achieved technical effects of the units and the modules in the foregoing embodiment, refer to the method embodiment. Details are not described herein again.

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer instructions are loaded and executed on a computer, all or some of procedures or functions according to the embodiments of this application are produced. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line (Digital Subscriber Line, DSL)) or a wireless manner (for example, infrared, wireless, or microwave). The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (Digital Versatile Disc, DVD)), a semiconductor medium (for example, a solid state disk (Solid State Disk, SSD)), or the like.

The foregoing descriptions are merely optional embodiments provided in this application, but are not intended to limit this application. Any modification, equivalent replacement, and improvement made within the technical scope disclosed in this application shall fall within the protection scope of this application.

## Claims

1. An upgrade package generation method, applied to a first device, wherein the method comprises:
obtaining a first installation package and a second installation package, wherein a version of the second installation package is higher than a version of the first installation package;
slicing the first installation package to obtain a first slice sequence;
slicing the second installation package to obtain a second slice sequence, wherein slices at a same ranking in the second slice sequence and the first slice sequence form a slice pair, and a plurality of slices in the second slice sequence and a plurality of slices in the first slice sequence form a plurality of slice pairs;
performing data processing on each slice pair based on a data similarity of each of the plurality of slice pairs to obtain upgrade package data corresponding to each slice pair, wherein the data processing comprises at least skip processing, XOR processing, or differential processing, and upgrade package data that corresponds to a slice pair and that is obtained through skip processing is empty; and
generating an upgrade package based on a slice sequence number of each of the plurality of slice pairs, and a data processing type and the upgrade package data that correspond to each slice pair, wherein the upgrade package comprises upgrade package data corresponding to a plurality of slice sequence numbers and data processing type information corresponding to each slice sequence number.

2. The method according to claim 1, wherein the plurality of slice pairs comprise a first slice pair, and the first slice pair comprises a first slice in the first slice sequence and a second slice in the second slice sequence; and
the performing data processing on each slice pair based on a data similarity of each of the plurality of slice pairs to obtain upgrade package data corresponding to each slice pair comprises:
if data of the first slice is the same as data of the second slice, performing skip processing on the first slice pair, wherein upgrade package data corresponding to the first slice pair is empty;
if data of the first slice is different from data of the second slice and a data similarity is greater than or equal to a first threshold, performing XOR processing on the first slice pair to obtain first data, and determining upgrade package data corresponding to the first slice pair based on the first data; or
if a data similarity between the first slice and the second slice is less than the first threshold, performing differential processing on the first slice pair to obtain second data, and determining upgrade package data corresponding to the first slice pair based on the second data.

3. The method according to claim 2, wherein the performing XOR processing on the first slice pair to obtain first data comprises:
performing XOR processing on data of the first slice and the second slice at a corresponding byte location to obtain the first data.

4. The method according to claim 3, wherein the performing XOR processing on data of the first slice and the second slice at a corresponding byte location to obtain the first data comprises:
if both the data of the first slice and the data of the second slice are binary data, performing XOR processing on binary values in the first slice and the second slice at the corresponding byte location to obtain the first data, wherein if values of the first slice and the second slice at the corresponding byte location are the same, a value of the first data at a corresponding byte location is 0; or if values of the first slice and the second slice at the corresponding byte location are different, a value of the first data at a corresponding byte location is 1; or
if the data of at least one of the first slice and the second slice is not binary data, converting data that is of a slice in the first slice and the second slice and that is not binary data into binary data, and performing XOR processing on binary values that are of the first slice and the second slice at the corresponding byte location and that are converted into binary data, to obtain the first data, wherein if the values that are of the first slice and the second slice at the corresponding byte location and that are converted into the binary data are the same, a value of the first data at the corresponding byte location is 0; or if the values that are of the first slice and the second slice at the corresponding byte location and that are converted into the binary data are different, a value of the first data at the corresponding byte location is 1.

5. The method according to any one of claims 2-4, wherein the determining upgrade package data corresponding to the first slice pair based on the first data comprises:
determining the first data as the upgrade package data corresponding to the first slice pair;
or
performing compression processing on the first data to obtain third data, and determining the third data as the upgrade package data corresponding to the first slice pair.

6. The method according to claim 5, wherein the first data is binary data, and the performing compression processing on the first data to obtain third data comprises:
performing compression processing on 0 in the first data to obtain the third data.

7. The method according to any one of claims 2-6, wherein the determining upgrade package data corresponding to the first slice pair based on the second data comprises:
determining the second data as the upgrade package data corresponding to the first slice pair;
or
performing compression processing on the second data to obtain fourth data, and determining the fourth data as the upgrade package data corresponding to the first slice pair.

8. The method according to any one of claims 1-7, wherein the generating an upgrade package based on a slice sequence number of each of the plurality of slice pairs, and a data processing type and the upgrade package data that correspond to each slice pair comprises:
writing upgrade package data corresponding to a slice pair indicated by each of the plurality of slice sequence numbers into data information of an initial data packet, and writing, into header information of the initial data packet, a data processing type corresponding to the slice pair indicated by each slice sequence number and storage location information that is in the data information of the initial data packet and that is of the upgrade package data corresponding to the slice pair indicated by each slice sequence number, wherein an initial data packet obtained after data writing is the upgrade package, and the plurality of slice sequence numbers are slice sequence numbers of the plurality of slice pairs.

9. The method according to claim 8, wherein the method further comprises:
writing a quantity of slice pairs of slices at same rankings in the first slice sequence and the second slice sequence, and slice sizes of slices in the first slice sequence and the second slice sequence into the header information of the initial data packet.

10. The method according to claim 9, wherein
both a slice quantity of the first slice sequence and a slice quantity of the second slice sequence are a preset quantity, and the quantity that is of the slice pairs of the slices at the same rankings and that is written into the header information is the preset quantity; and
a slice size of each slice in the first slice sequence and the second slice sequence is a preset size, and the slice sizes that are of the slices in the first slice sequence and the second slice sequence and that are written into the header information are the preset size.

11. The method according to any one of claims 8-10, wherein the storage location information that is in the data information of the initial data packet and that is of the upgrade package data corresponding to the slice pair indicated by each slice sequence number is an incremental offset that is in the data information of the initial data packet and that is of the upgrade package data corresponding to the slice pair indicated by each slice sequence number.

12. An upgrade package installation method, applied to a second device, wherein the method comprises:
obtaining an upgrade package, wherein the upgrade package comprises upgrade package data corresponding to a plurality of slice sequence numbers and data processing type information corresponding to each slice sequence number;
performing restoration processing on a slice corresponding to each slice sequence number based on a data processing type corresponding to each of the plurality of slice sequence numbers, to obtain installation package data corresponding to each slice sequence number;
when the data processing type corresponding to each slice sequence number is skip processing, performing copy processing on a slice corresponding to each slice sequence number in a first slice sequence, to obtain the installation package data corresponding to each slice sequence number, wherein the first slice sequence is obtained by performing slice processing on a first installation package stored in the second device;
when the data processing type corresponding to each slice sequence number is XOR processing, performing XOR processing on upgrade package data corresponding to each slice sequence number and a slice corresponding to each slice sequence number in the first slice sequence, to obtain the installation package data corresponding to each slice sequence number; or
when the data processing type corresponding to each slice sequence number is differential processing, performing inverse differential processing on upgrade package data corresponding to each slice sequence number and a slice corresponding to each slice sequence number in the first slice sequence, to obtain the installation package data corresponding to each slice sequence number;
generating a second installation package based on installation package data corresponding to the plurality of slice sequence numbers; and
installing the second installation package.

13. The method according to claim 12, wherein the plurality of slice sequence numbers are slice sequence numbers of a plurality of slice pairs comprising slices at same rankings in the first slice sequence and a second slice sequence, the second slice sequence is obtained by slicing a second installation package whose version is higher than that of the first installation package, the upgrade package data corresponding to each of the plurality of slice sequence numbers is obtained by performing data processing on a corresponding slice pair based on a data similarity of the corresponding slice pair, the data processing comprises at least skip processing, XOR processing, or differential processing, and upgrade package data whose corresponding data processing type is skip processing is empty.

14. The method according to claim 12 or 13, wherein header information of the upgrade package comprises a data processing type corresponding to each of the plurality of slice sequence numbers and storage location information of the upgrade package data corresponding to each of the plurality of slice sequence numbers in data information of the upgrade package, and the data information of the upgrade package stores the upgrade package data corresponding to each of the plurality of slice sequence numbers; and
before the performing restoration processing on a slice corresponding to each slice sequence number based on a data processing type corresponding to each of the plurality of slice sequence numbers, to obtain installation package data corresponding to each slice sequence number, the method further comprises:
obtaining, from the header information of the upgrade package, the data processing type corresponding to each of the plurality of slice sequence numbers and the storage location information of the upgrade package data corresponding to each of the plurality of slice sequence numbers in the data information of the upgrade package; and
obtaining the upgrade package data corresponding to each slice sequence number from the data information of the upgrade package based on the storage location information of the upgrade package data corresponding to each slice sequence number in the data information of the upgrade package.

15. The method according to claim 14, wherein the header information of the upgrade package further comprises a slice size; and
before the performing restoration processing on a slice corresponding to each slice sequence number based on a data processing type corresponding to each of the plurality of slice sequence numbers, to obtain installation package data corresponding to each slice sequence number, the method further comprises:
slicing, based on the slice size, the first installation package stored in the second device to obtain the first slice sequence.

16. The method according to any one of claims 12-15, wherein the generating a second installation package based on the installation package data corresponding to the plurality of slice sequence numbers comprises:
concatenating the installation package data corresponding to the plurality of slice sequence numbers to obtain the second installation package.

17. The method according to any one of claims 12-16, wherein the obtaining an upgrade package comprises:
obtaining a compressed package of the upgrade package, wherein the compressed package is obtained by compressing the upgrade package; and
decompressing the compressed package to obtain the upgrade package.

18. A computer device, wherein the computer device comprises a memory, a processor, and a computer program stored in the memory and capable of running on the processor, and when the computer program is executed by the processor, the method according to any one of claims 1-11 or claims 12-17 is implemented.

19. A computer-readable storage medium, wherein the computer-readable storage medium stores instructions, and when the instructions are run on a computer, the computer is enabled to perform the method according to any one of claims 1-11 or claims 12-17.
